# EUROPEAN PATENT SPECIFICATION

(11) **EP 3 305 547 B1**
(45) Date of publication and mention of the grant of the patent: **24.07.2019**
(21) Application number: 16800094.1
(22) Date of filing: 26.05.2016
(51) Int. Cl.: B60C 5/01, B60C 1/00, B60C 9/02, B29D 30/06, B29D 30/08, B29D 30/58, C09J 175/04

(54) **TIRE AND METHOD FOR PRODUCING SAME**
REIFEN UND VERFAHREN ZUR HERSTELLUNG DAVON
PNEUMATIQUE ET SON PROCÉDÉ DE PRODUCTION

(30) Priority: 28.05.2015 JP 2015108620; 28.05.2015 JP 2015108621
(43) Date of publication of application: 11.04.2018
(73) Proprietor: Bridgestone Corporation, Tokyo 104-8340 (JP)
(72) Inventor: HOMMA, Masahiro, Tokyo 104-8340 (JP)
(74) Representative: Oxley, Robin John George
(86) International application number: PCT/JP2016/065593
(87) International publication number: WO 2016/190390

(56) References cited:
- WO-A1-2013/129524
- WO-A1-2013/129524
- WO-A1-2014/188914
- WO-A1-2014/188914
- JP-A- 2012 066 809
- JP-A- 2012 066 809
- JP-A- 2014 227 500
- JP-A- 2014 227 500

## Description

### Technical Field

The present invention relates to a tire and a method of producing the same.

### Background Art

A tire, in which an exterior component such as a tread using rubber is attached to a tire frame containing a resin, has been heretofore proposed (Japanese Patent Application Laid-Open (JP-A) No. 2012-46030). Reference is also made to JP 2014-227500 which discloses a method for producing a joined body, WO 2014/188914 which discloses a laminate and a method for producing the laminate, JP 2012-066809 which discloses a tire which is made of a thermoplastic polymeric material and WO 2013/129524 which discloses a tire having a ring-shaped tire skeleton body formed by a resin material containing and thermoplastic resin and fibers.

### SUMMARY OF INVENTION

### Technical Problem

When a resin material is used in a tire frame, although various materials may be selected as a resin, the selected material is required to exhibit such performances as required for a tire.

When an adhesive is used for fixing an exterior component on a tire frame, it is desirable that such an adhesive is selected as is able to exhibit the required performances for a tire considering the affinity between materials used for either of the components and the adhesive. However, it is difficult to select an adhesive able to fix adequately a rubber-made exterior component to a tire frame using a resin material, and there still remains room for improvement with respect to fixation of both components.

Under such circumstances, the object of an embodiment of the invention is to provide a tire, in which an exterior component is not apt to detach from a tire frame. Solution to Problem
[1] A tire including a tire frame, which is toric and is formed with a resin material containing a thermoplastic resin, an adhesion layer, which is formed from a composition including a polythiol compound, a polyisocyanate compound, and a radical generator, and in which a ratio (S/N) of a number (S) of sulfur atoms contained in the adhesion layer to a number (N) of nitrogen atoms contained in the adhesion layer is three or more, and an exterior component, which contains a rubber, and which is mounted on the tire frame via the adhesion layer such that at least part of the rubber touches the adhesion layer, characterised in that the radical generator is a thermal radical generator that is a peroxide, and a boiling point of a decomposition product of the thermal radical generator that is the peroxide is 150°C or higher.

### Advantageous Effects of Invention

According to an embodiment of the invention, a tire, in which an exterior component is not apt to detach from a tire frame, may be provided.

### BRIEF DESCRIPTION OF DRAWINGS

Figure 1A is a perspective view depicting a cross-section of a part of a tire according to the first embodiment.
Figure 1B is a cross-sectional view of a bead area fit into a rim.
Figure 2 is a cross-sectional view along the tire rotation axis depicting a state where a reinforcing cord is embedded in the crown area of a tire case of a tire according to the first embodiment.
Figure 3 is a perspective view depicting a cross-section of a part of a tire according to the second embodiment.

### DESCRIPTION OF EMBODIMENTS

The modes of carrying out the invention will be described referring to embodiments 1 to 3, provided that they are respectively an example, and may be implemented with various alterations without departing from the invention as defined by the claims. It should be understood that the scope of the invention be not limited to the embodiments, and are defined by the claims.

"Resin" is herein a concept including a thermoplastic resin and a thermosetting resin, but excluding a vulcanized rubber, such as a natural rubber or a synthetic rubber.

"Rubber" is a polymer compound having elasticity, and is discriminated herein from a thermoplastic resin elastomer.

"Thermoplastic resin" means a polymeric compound, which material softens and flows with temperature elevation, and when cooled, it comes into a relatively hard and strong state. It is a concept including a thermoplastic elastomer. Meanwhile, "thermoplastic resin elastomer" is a polymeric compound having elasticity, and means a thermoplastic resin composed of a copolymer having a polymer constituting a crystalline hard segment with a high melting point, or a hard segment with a high cohesion, and a polymer constituting an amorphous soft segment with a low glass transition temperature.

In this regard, in a thermoplastic resin elastomer a hard segment acts as a pseudo-crosslinking point to develop elasticity (so-called, physical crosslinking). On the other hand, a rubber has a double bond, *etc.* in the molecular chain, and a three dimensional network structure is formed by adding sulfur, *etc.* for crosslinking (namely, vulcanization) to develop elasticity (namely, development of elasticity by chemical crosslinking). Therefore, in a thermoplastic resin elastomer, a hard segment is melted by heating, and a pseudo-crosslinking point is formed again by cooling.

A numerical range expressed by "x to y" means herein a range including the values of x and y as the minimum and maximum values, respectively.

In referring herein to a content of an ingredient in a composition, when plural substances exist corresponding to an ingredient in the composition, the content means, unless otherwise specified, the total amount of the plural substances existing in the composition.

### [First Embodiment]

A tire according to the first embodiment includes a tire frame, which is toric and is formed from a resin material containing a thermoplastic resin; an adhesion layer, which is formed from a composition including a polythiol compound (hereinafter also referred to as "polythiol compound (A)"), a polyisocyanate compound (hereinafter also referred to as "polyisocyanate compound (B)"), and a radical generator (hereinafter also referred to as "radical generator (C)"), and in which a ratio (S/N) of a number (S) of sulfur atoms contained in the adhesion layer to a number (N) of nitrogen atoms contained in the adhesion layer is three or more; and an exterior component, which contains a rubber, and which is mounted on the tire frame via the adhesion layer such that at least part of the rubber touches the adhesion layer.

Throughout the current description, a polythiol compound (A), a polyisocyanate compound (B), and a radical generator (C), as well as a catalyst (D) and a surface conditioner (E) described below may be occasionally referred to respectively as an ingredient (A), an ingredient (B), an ingredient (C), an ingredient (D), and an ingredient (E).

Further, throughout the current description, "ratio (S/N)" means a ratio of the number of sulfur atoms contained in the adhesion layer to the number of nitrogen atoms contained in the adhesion layer. Namely, when the number of nitrogen atoms contained in the adhesion layer is expressed as "N", and the number of sulfur atoms contained in the adhesion layer is expressed as "S", the "ratio (S/N)" = S/N".

Since the tire according to the first embodiment has the above constitution, an exterior component is not apt to detach from a tire frame. Although the reason for the above is not very clear, it is presumed as follows.

Firstly, part of thiol groups in an ingredient (A) contained in the composition react with an isocyanate group in an ingredient (B) to cause polymerization of the ingredient (A) with the ingredient (B). It is conceivable that the film strength of an adhesion layer may be increased owing to the copolymerization of the ingredient (A) and the ingredient (B).

Meanwhile, a radical is generated through activation of an ingredient (C), and the generated radical acts on a thiol group in an ingredient (A) having not reacted with an isocyanate group in an ingredient (B) to generate a thiyl radical. The thiyl radical causes a thiol-ene reaction with a carbon-carbon double bond included in a rubber of an exterior component to establish a chemical bond at an interface with the rubber, so that the interfacial adhesive strength between an adhesion layer and an exterior component can be enhanced.

As described above, part of thiol groups contained in an ingredient (A) are used for a copolymerization reaction with an ingredient (B), and at least part of thiol groups not having reacted with an isocyanate group in the ingredient (B) are used for a thiol-ene reaction with a rubber.

In the case of a tire according to the first embodiment the ratio (S/N) in an adhesion layer is three or more. When the ratio (S/N) in an adhesion layer is 3 or more, a copolymerization reaction with an ingredient (B) and a thiol-ene reaction with a rubber occur with good balance, such that both a high film strength and a high interfacial adhesive strength can be obtained, and an exterior component may become hardly detachable from a tire frame.

Hereinafter, the overall adhesion strength including a film strength and an interfacial adhesive strength may be occasionally referred to as "adhesive strength".

A tire according to the first embodiment includes as described above at least a tire frame, an adhesion layer, and an exterior component, and, if necessary, may include another layer. Examples of such other layer include an undercoat layer to be provided between the tire frame and the adhesion layer

Each component and layer will be described below in detail.

### <<Tire Frame>>

A tire frame in the first embodiment is formed from a resin material containing a thermoplastic resin.

A "resin material" herein contains at least a thermoplastic resin, and may contain another ingredient such as an additive.

Examples of the thermoplastic resin include a polyamide thermoplastic resin, a polyester thermoplastic resin, an olefinic thermoplastic resin, a polyurethane thermoplastic resin, a vinyl chloride thermoplastic resin, and a polystyrene thermoplastic resin. They may be used singly or in combination of two or more kinds thereof. Among them a polyamide thermoplastic resin, a polyester thermoplastic resin, and an olefinic thermoplastic resin are preferable, and a polyamide thermoplastic resin, and an olefinic thermoplastic resin are further preferable.

Examples of a thermoplastic elastomer include a polyamide thermoplastic elastomer (TPA), a polystyrene thermoplastic elastomer (TPS), a polyurethane thermoplastic elastomer (TPU), an olefinic thermoplastic elastomer (TPO), a polyester thermoplastic elastomer (TPEE), a crosslinked thermoplastic rubber (TPV), and other thermoplastic elastomers (TPZ) as stipulated in JIS K 6418. Taking elasticity required in traveling and moldability in producing into consideration, it is preferable to use a thermoplastic resin as a resin material for forming a tire frame, and further preferable to use a thermoplastic elastomer. Further, when a polyamide thermoplastic resin is used as a thermoplastic resin for covering a reinforcing metal cord component, it is especially preferable to use a polyamide thermoplastic elastomer.

A polyamide thermoplastic elastomer, and a polyolefin thermoplastic elastomer will be described below as an example of a thermoplastic resin contained in a resin material for forming a tire frame.

### <Polyamide Thermoplastic Elastomer>

A polyamide thermoplastic elastomer means a thermoplastic elastomer, which is composed of a copolymer having a polymer constituting a crystalline hard segment with a high melting point, and a polymer constituting an amorphous soft segment with a low glass transition temperature, and has an amide bond (-CONH-) in a main chain of the polymer constituting a hard segment.

### -Hard Segment-

Examples of a polyamide forming a hard segment (a polymer forming a hard segment) may include polyamides to be synthesized with a monomer expressed by the following Formula (1) or Formula (2).

Formula (1): H₂N-R¹-COOH

In Formula (1), R¹ represents a molecular chain of a C2 to C20 hydrocarbon, or a C2 to C20 alkylene group.

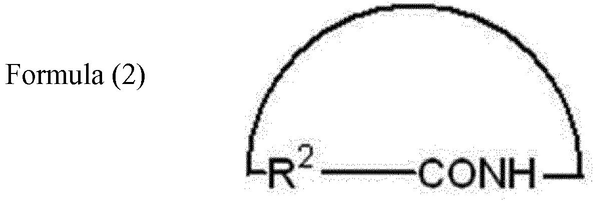

In Formula (2), R² represents a molecular chain of a C3 to C20 hydrocarbon, or a C3 to C20 alkylene group.

Examples of a monomer expressed by Formula (1) or Formula (2) may include ω-aminocarboxylic acid and lactam. Examples of the polyamide forming a hard segment may include a condensation polymer of the ω-aminocarboxylic acid or the lactam, and a condensation copolymer of a diamine and a dicarboxylic acid.

Examples of the polyamide forming a hard segment may include a polyamide (polyamide 6) formed by ring opening polycondensation of ε-caprolactam, a polyamide (polyamide 11) formed by ring opening polycondensation of undecane lactam, a polyamide (polyamide 12) formed by ring opening polycondensation of lauryl lactam, a polyamide (polyamide 12) formed by polycondensation of 12-aminododecanoic acid, a polyamide (polyamide 66) formed by polycondensation of a diamine and a dibasic acid, and a polyamide (amide MX) having *m*-xylylenediamine as a constituent.

An amide MX having *m*-xylylenediamine as a constituent may be expressed for example with the following constituent (A-1) [in (A-1) n represents an optional number of recurring units], and n is preferably from 2 to 100, and further preferably from 3 to 50.

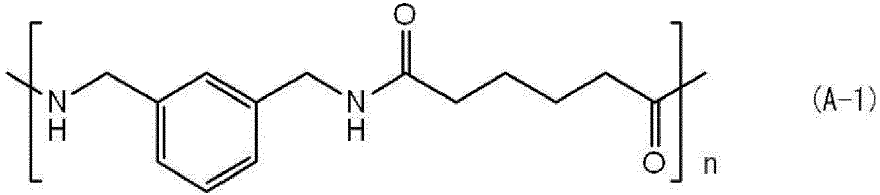

The number average molecular weight of a polymer (polyamide) forming the hard segment is preferably from 300 to 15000 from the viewpoint of melt molding property, toughness, and flexibility at low temperature.

### -Soft Segment-

Examples of a polymer for forming the soft segment (namely, a high molecular weight compound forming a soft segment) may include polyester and polyether, as well as poly(ethylene glycol), poly(propylene glycol), poly(tetramethylene ether)glycol (PTMG), and an ABA type triblock polyether. They may be used singly or in combination of two or more kinds thereof.

A functional group may be introduced to the end of a polymer forming a soft segment. There is no particular restriction on the functional group, insofar as it can react with an end group of a compound to react with a polymer forming a soft segment (namely, a polymer forming a hard segment, a chain extender, *etc*.). For example, in a case in which an end group of a compound to react with a polymer forming a soft segment is a carboxy group, examples of the functional group may include an amino group.

Examples of a polymer forming a soft segment, to which end an amino group is introduced, may include a polyether diamine, in which ammonia, *etc.* is reacted with the end of polyether. Specific examples thereof may include an ABA type triblock polyether diamine.

Examples of an "ABA type triblock polyether" may include a polyether expressed by the following Formula (3).

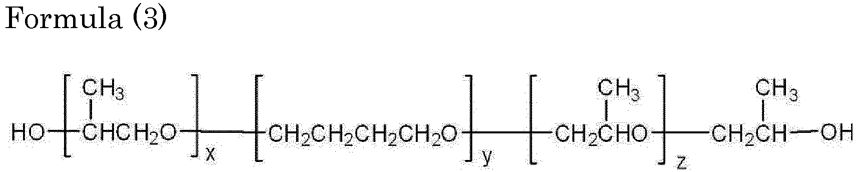

In Formula (3), x and z each independently represent an integer from 1 to 20. y represents an integer from 4 to 50.

Examples of "ABA type triblock polyether diamine" may include a polyether diamine expressed by the following Formula (N).

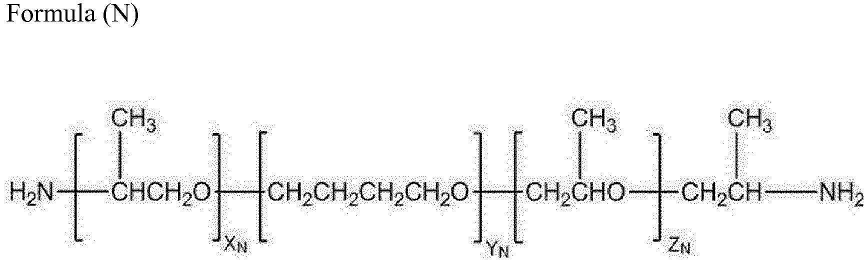

In Formula (N), X_{N} and Z_{N} each independently represent an integer from 1 to 20. Y_{N} represents an integer from 4 to 50.

The number average molecular weight of a polymer forming a soft segment is preferably from 200 to 6000 from the viewpoint of toughness and flexibility at low temperature, more preferably from 400 to 4000, and especially preferably from 600 to 2000.

### -Bonding Link-

As described above, examples of a bonding link of a polyamide thermoplastic elastomer may include a part bonded with a chain extender.

Examples of the chain extender may include a dicarboxylic acid, a diol, and a diisocyanate. As the dicarboxylic acid, at least one kind selected out of, for example, an aliphatic dicarboxylic acid, an alicyclic dicarboxylic acid, an aromatic dicarboxylic acid, or a derivative thereof may be used. Examples of the diol may include an aliphatic diol, an alicyclic diol, and an aromatic diol. As the diisocyanate, for example, an aromatic diisocyanate, an aliphatic diisocyanate, an alicyclic diisocyanate, or a mixture thereof may be used.

### -Molecular Weight-

The number average molecular weight of a polyamide thermoplastic elastomer is for example from 15,700 to 200,000. When the number average molecular weight of the polyamide thermoplastic elastomer is less than 15,700, the rim assembling performance may be lowered. When the number average molecular weight of the polyamide thermoplastic elastomer exceeds 200,000, the melt viscosity is increased, and it may become necessary to increase a molding temperature, or a mold temperature in order to prevent shortage in filling in forming a tire frame. By doing so, the cycle time may be prolonged to deteriorate the productivity.

The number average molecular weight of the polyamide thermoplastic elastomer is preferably from 20,000 to 160,000. The number average molecular weight of the polyamide thermoplastic elastomer may be measured by gel permeation chromatography (GPC), for which, for example, a GPC system such as "HLC-8320GPC EcoSEC" (produced by Tosoh Corporation) may be used. The number average molecular weight of another thermoplastic elastomer described below may be measured identically.

With respect to the polyamide thermoplastic elastomer, the ratio (x/y) of the mass (x) of the hard segment to the mass (y) of the soft segment is preferably from 30/70 to 80/20 from the viewpoint of securement of tire stiffness and rim assembly ability, and more preferably from 50/50 to 75/25.

When the chain extender is used, it is preferable to select a content such that a functional group at the end of a polymer for forming a soft segment (for example, a hydroxy group, or an amino group), and a carboxyl group of the chain extender are nearly equimolar.

### -Production Method-

The polyamide thermoplastic elastomer may be synthesized by copolymerizing a polymer forming the hard segment with a polymer forming the soft segment by a method known in the art.

For example, the polyamide thermoplastic elastomer may be obtained by polymerizing a monomer to constitute a hard segment (for example, ω-aminocarboxylic acid such as 12-aminododecanoic acid, or a lactam such as lauryl lactam) and a chain extender (for example, adipic acid, or dodecane dicarboxylic acid) in a vessel; then adding a polymer to constitute a soft segment (for example, poly(propylene glycol), an ABA type triblock polyether, or a diamine obtained by modifying the ends thereof to amino groups); and further polymerizing the mixture.

Especially, in a case in which an ω-aminocarboxylic acid is used as a monomer to constitute a hard segment, synthesis may be conducted by performing normal pressure melt polymerization, or by performing normal pressure melt polymerization and additionally vacuum melt polymerization. In a case in which a lactam is used as a monomer to constitute a hard segment, coexistence of an appropriate amount of water may be allowed, and production by a method including melt polymerization under a pressure of from 0.1 to 5 MPa, and subsequent normal pressure melt polymerization and/or vacuum melt polymerization is possible. The synthesis reaction may be conducted either batch-wise or continuously. For the aforementioned synthesis reaction, a batch reactor, a one-vessel type, or a multi-vessel type continuous reaction apparatus, and a tubular continuous reaction apparatus may be used singly or in an appropriate combination thereof.

### <Polyolefin Thermoplastic Resin Elastomer>

A polyolefin thermoplastic resin elastomer means a material, in which at least a polyolefin constitutes a crystalline hard segment with a high melting point, and another polymer (for example, other polyolefin, or poly(vinyl compound)) constitutes an amorphous soft segment with a low glass transition temperature. Examples of the same may include a polyolefin thermoplastic resin elastomer (TPO) as stipulated in JIS K 6418: 2007.

### -Hard Segment, and Soft Segment-

Examples of a polyolefin for forming a hard segment may include polyethylene, polypropylene, isotactic polypropylene, and polybutene

Examples of a polyolefin for forming a soft segment may include polyolefin and poly(vinyl compound), and, for example, an ethylene propylene rubber, such as EPM and EPDM may be used as a soft segment.

Examples of a polyolefin thermoplastic resin elastomer may include an olefin/α-olefin random copolymer, and an olefin block copolymer, such as a propylene block copolymer, an ethylene/propylene copolymer, a propylene/1-hexene copolymer, a propylene/4-methyl-1-pentene copolymer, a propylene/1-butene copolymer, an ethylene/1-hexene copolymer, an ethylene/4-methylpentene copolymer, an ethylene/1-butene copolymer, a 1-butene/1-hexene copolymer, 1-butene/4-methylpentene, an ethylene/methacrylic acid copolymer, an ethylene/methyl methacrylate copolymer, an ethylene/ethyl methacrylate copolymer, an ethylene/butyl methacrylate copolymer, an ethylene/methyl acrylate copolymer, an ethylene/ethyl acrylate copolymer, an ethylene/butyl acrylate copolymer, a propylene/methacrylic acid copolymer, a propylene/methyl methacrylate copolymer, a propylene/ethyl methacrylate copolymer, a propylene/butyl methacrylate copolymer, a propylene/methyl acrylate copolymer, a propylene-ethyl acrylate copolymer, a propylene/butyl acrylate copolymer, an ethylene/vinyl acetate copolymer, and a propylene/vinyl acetate copolymer.

The percentage of a polyolefin in the polyolefin thermoplastic resin elastomer is preferably from 50% by mass to 100% by mass.

As a polyolefin thermoplastic resin elastomer, for example, a polyolefin thermoplastic resin elastomer having an acidic group (namely, an acid-modified polyolefin thermoplastic resin elastomer) may be used.

In this regard, "acid-modified" means that an unsaturated compound having an acidic group, such as a carboxylic acid group, a sulfate group, and a phosphate group, is bonded to an olefinic thermoplastic resin elastomer. For example, using an unsaturated carboxylic acid (generally, maleic anhydride) as an unsaturated compound having an acidic group, an unsaturated bond site of the unsaturated carboxylic acid is bonded to an olefinic thermoplastic resin elastomer (for example, graft polymerization).

### -Molecular Weight-

The number average molecular weight of a polyolefin thermoplastic resin elastomer is preferably from 5,000 to 10,000,000. When the number average molecular weight of a polyolefin thermoplastic resin elastomer is from 5,000 to 10,000,000, the mechanical properties of a thermoplastic resin material is adequate, and the processability is also superior. From the same viewpoint, the number average molecular weight of the polyolefin thermoplastic resin elastomer is further preferably from 7,000 to 1,000,000, and especially preferably from 10,000 to 1,000,000.

The mass ratio (x/y) of a hard segment (x) to a soft segment (y) in the polyolefin thermoplastic resin elastomer is preferably from 50/50 to 95/5 from the viewpoint of moldability, and more preferably from 50/50 to 90/10.

### -Production Method-

A polyolefin thermoplastic resin elastomer may be synthesized by copolymerization according to a method known in the art.

Acid modification of a polyolefin thermoplastic resin elastomer may be conducted, for example, through graft copolymerization by kneading an olefinic thermoplastic resin elastomer with an unsaturated compound having an acidic group (for example, unsaturated carboxylic acid) and an organic peroxide using a twin screw extruder. The addition amount of the unsaturated compound having an acidic group is preferably from 0.1 part by mass to 20 parts by mass with respect to 100 parts by mass of the olefinic thermoplastic resin elastomer, and further preferably from 0.5 part by mass to 10 parts by mass.

### <Other Additive>

Various additives, such as various fillers (for example, silica, calcium carbonate, and clay), an anti-aging agent, a vulcanizing agent, a vulcanization accelerator, a metallic oxide, a process oil, a plasticizer, a colorant, an weathering agent, and a reinforcing material, may be added to a tire frame depending on a material to be used. There is no particular restriction on the content of the additive in a resin material (tire frame), and the additive may be added appropriately to the extent that the effects of the invention be not impaired.

Examples of an anti-aging agent may include an anti-aging agent described in International Publication No. WO 2005/063482. Specific examples thereof may include an amine type anti-aging agent including a naphthyl amine, such as phenyl-2-naphthylamine, and phenyl-1-naphthylamine, a diphenyl amine, such as 4,4'-(α,α-dimethylbenzyl)diphenylamine, and *p-(p*-toluenesulfonyl amide)diphenylamine, and a *p*-phenylenediamine, such as *N,N'*-diphenyl-*p*-phenylenediamine, and *N*-isopropyl-*N*'-phenyl-*p*-phenylenediamine; as well as a derivative or a mixture thereof.

As an vulcanizing agent, a vulcanizing agent known in the art, such as sulfur, an organic peroxide, and a resin vulcanizing agent, may be used. As a vulcanization accelerator, a vulcanization accelerator known in the art, such as an aldehyde, an ammonia, an amine, a guanidine, a thiourea, a thiazole, a sulfenamide, a thiuram, a dithiocarbamate, and a xanthate, may be used. Examples of the fatty acid may include stearic acid, palmitic acid, myristic acid, and lauric acid, and they may be added in a state of a salt such as zinc stearate. Among the above, stearic acid is preferable. Examples of a metallic oxide may include zinc white (ZnO), iron oxide, and magnesium oxide, and among others zinc white is preferable. As the process oil, any of an aromatic, a naphthene, and a paraffinic may be used.

### <Physical Properties of Resin Material Contained in Tire Frame>

The melting point (or softening point) of a resin material is ordinarily from 100°C to 350°C, preferably approx. from 100°C to 250°C, and from the viewpoint of the productivity of a tire it is preferably approx. from 120°C to 250°C, and further preferably from 120°C to 200°C.

When a resin material with a melting point of from 120°C to 250°C is used, in forming a tire frame, for example, by welding its partitioned bodies (namely, frame segments), the bonding strength between the tire frame segments is adequate even in the case of a frame welded together in an ambient temperature range of from 120°C to 250°C. Therefore, a tire of the first embodiment is superior in durability in traveling, such as puncture resistance or abrasion resistance. In this regard, the heating temperature is preferably higher than the melting point (or softening point) of a resin material forming a tire frame segment by from 10°C to 150°C, and further preferably higher by from 10°C to 100°C.

The tensile yield strength stipulated in JIS K 7113: 1995 of a resin material is preferably 5 MPa or more, more preferably from 5 MPa to 20 MPa, and further preferably from 5 MPa to 17 MPa. When the tensile yield strength of a resin material is 5 MPa or more, the material is tolerant to deformation due to a load on a tire in traveling.

The tensile yield elongation stipulated in JIS K 7113: 1995 of a resin material is preferably 10% or more, more preferably from 10% to 70%, and further preferably from 15% to 60%. When the tensile yield elongation of a resin material is 10% or more, the elastic region is wide, and the rim assembling performance may be improved.

The tensile elongation at break stipulated in JIS K 7113: 1995 of a resin material is preferably 50% or more, more preferably 100% or more, further preferably 150% or more, and especially preferably 200% or more. When the tensile elongation at break of a resin material is 50% or more, the rim assembling performance is superior, and resistance to destruction at a collision may be improved.

The deflection temperature under load stipulated in ISO 75-2 or ASTM D648 of a resin material (0.45 MPa load) is preferably 50°C or higher, more preferably from 50°C to 150°C, and further preferably from 50°C to 130°C. When the deflection temperature under load of a resin material is 50°C or higher, deformation of a tire frame may be suppressed, even when vulcanization is conducted in producing a tire.

The tensile modulus of a resin material is preferably from 100 MPa to 500 MPa from the viewpoint of rim assembling performance and inner pressure retaining property, further preferably from 200 MPa to 400 MPa, and especially preferably from 200 MPa to 350 MPa.

### << Adhesion Layer>>

As described above, an adhesion layer is a layer formed from a composition containing an ingredient (A), an ingredient (B), and an ingredient (C).

An adhesion layer formed from the composition may be, for example, an adhesion layer formed by forming a composition layer using the composition, and applying energy for activating the ingredient (C) to the composition layer in a state where the composition layer and a rubber contained in an exterior component are in contact. With the thus formed adhesion layer, the adhesion layer and the exterior component are bonded together chemically as described above, through which a favorable adhesive strength at an interface between the adhesion layer and the exterior component is presumably obtained.

A composition layer includes, for example, a layer of a coated film obtained by painting a composition, and also a layer of an adhesive composition film prepared by forming a film of a composition through polymerization of the ingredient (A) and the ingredient (B) in the composition for forming a coated film.

In this regard, to "form a film" means that a composition is shaped into a film, and an ingredient (A) and an ingredient (B) in a composition are polymerized to harden the film, and to impart a favorable shape retention property thereto. The "layer of a coated film" means a state before the composition is formed into a film, and there exist an ingredient (A) and an ingredient (B) unpolymerized.

In other words, when a composition layer is a layer of a coated film, by applying energy to the coated film in a state, where the coated film and a rubber contained in an exterior component are in contact, a thiol-ene reaction occurs at an interface, and an ingredient (A) and an ingredient (B) are polymerized, so that the coated film becomes an adhesion layer.

When a composition layer is a layer of an adhesive composition film, an ingredient (A) and an ingredient (B) are polymerized in the course of formation of an adhesive composition film. Then, by applying energy to the adhesive composition film in a state where the adhesive composition film and a rubber contained in an exterior component are in contact, a thiol-ene reaction occurs at an interface, so that the adhesive composition film becomes an adhesion layer.

An adhesion layer satisfies, as described above, the condition that the ratio (S/N) of the number (S) of sulfur atoms contained in the adhesion layer to the number (N) of nitrogen atoms contained in the adhesion layer is three or more. In other words, a composition, formulated such that the ratio (S/N) in an adhesion layer obtained as the result of polymerization of an ingredient (A) and an ingredient (B) and a thiol-ene reaction at an interface becomes 3 or more, is used. For example, in a case in which the ratio (S/N) does not change in the course of conversion of a composition layer to an adhesion layer, the ratio (S/N) in the adhesion layer becomes three or more by selecting the ratio (S/N) in a composition to be used (the ratio of the number (S) of sulfur atoms contained in the composition to the number (N) of nitrogen atoms contained in the composition) at three or more.

The ratio (S/N) in an adhesion layer is preferably 4.44 or more from the viewpoint of attainment of a favorable adhesive strength.

Examples of a method of measuring the ratio (S/N) in an adhesion layer may include an elementary analysis. Specifically, a value of the ratio (S/N) may be determined, for example, by removing an exterior component from a tire, slicing out a sample from an adhesion layer, and performing an elementary analysis thereon.

Although there is no particular restriction on the thickness of an adhesion layer, it is preferably from 10 µm to 1000 µm, and more preferably from 30 µm to 300 µm. When the thickness of an adhesion layer is in the range, there are advantages that an exterior component becomes resistant to detachment compared to a case with a thickness less than the range, and concentration of a stress to an adhesion layer can be better avoided compared to a case with a thickness more than the range.

The composition will be described below in detail

### <Composition>

The composition contains at least an ingredient (A), an ingredient (B), and an ingredient (C), and may contain if necessary another ingredient.

### -Polythiol Compound (A)-

A polythiol compound means herein a compound having two or more thiol groups in a molecule. As an ingredient (A) only one kind of polythiol compound may be used, or two or more kinds of polythiol compounds may be used in combination.

Although there is no particular restriction on the number of thiol groups in a molecule of a polythiol compound (A), insofar as the ratio (S/N) in an adhesion layer satisfies the aforementioned relationship, one having three or more thiol groups in a molecule is preferable from the viewpoint of improvement of the adhesive strength. There is no particular restriction on the upper limit of the number of thiol groups in a molecule of the polythiol compound (A), and it may be selected appropriately to the extent that the effect of the invention is not impaired. Although the number of thiol groups in a molecule of the polythiol compound (A) may be different in a case of a low-molecular-weight compound and in a case of a high-molecular-weight compound, it may be appropriately decided in a range of ordinarily from 2 to 7, preferably from 3 to 6, and further preferably from 3 to 4. It is to be understood that such ranges do not restrict the scope of the invention.

The polythiol compound (A) may include a primary, secondary, or tertiary thiol, and a primary thiol is preferable from the viewpoint of enhancement of adhesive strength.

The molecular weight of the polythiol compound (A) is preferably 3000 or less from the viewpoint of enhancement of adhesive strength, more preferably 2000 or less, further preferably 1000 or less, still further preferably 900 or less, and especially preferably 800 or less. Although there is no particular restriction on the lower limit of the molecular weight of the polythiol compound (A), it is preferably, for example, 200 or more, and further preferably 300 or more. In this regard, in a case in which the polythiol compound (A) is a polymer, the molecular weight means a number average molecular weight in terms of styrene.

Examples of the polythiol compound (A) may include an aliphatic polythiol, which may have a hetero atom, and an aromatic polythiol, which may have a hetero atom, and an aliphatic polythiol, which may have a hetero atom, is preferable from the viewpoint of enhancement of adhesive strength.

In this regard, an "aliphatic polythiol, which may have a hetero atom" means an aliphatic compound, which has two or more thiol groups in a molecule, and may have a hetero atom. Meanwhile, an "aromatic polythiol, which may have a hetero atom" means an aromatic compound, which has two or more thiol groups in a molecule, and may have a hetero atom.

The hetero atom is preferably at least one kind selected out of oxygen, nitrogen, sulfur, phosphorus, halogen, or silicon from the viewpoint of enhancement of adhesive strength, more preferably at least one kind selected out of oxygen, nitrogen, sulfur, phosphorus, or halogen, and especially preferably at least one kind selected out of oxygen, nitrogen, or sulfur.

### (Aliphatic Polythiol, Which May Have a Hetero Atom)

Examples of an aliphatic polythiol, which may have a hetero atom, may include a polythiol, in which a moiety other than a thiol group is an aliphatic hydrocarbon, such as a C2 to C20 alkane dithiol; a polythiol derived from a halohydrin adduct of an alcohol through substitution of a halogen atom with a thiol group; a polythiol composed of a hydrogen sulfide reaction product of a polyepoxide compound; a thioglycolic acid ester obtained by esterification between a polyhydric alcohol having from two to six hydroxy groups in a molecule and a thioglycolic acid; a mercapto fatty acid ester obtained by esterification between a polyhydric alcohol having from two to six hydroxy groups in a molecule and a mercapto fatty acid; a thiol isocyanurate compound obtained by a reaction between an isocyanurate compound and a thiol; a thiol having a polysulfide group; a silicone modified with a thiol group; and silsesquioxane modified with a thiol group.

Examples of the polyhydric alcohol having from two to six hydroxy groups in a molecule may include a C2 to C20 alkanediol, a poly(oxyalkylene)glycol, glycerol, diglycerol, trimethylolpropane, ditrimethylolpropane, pentaerythritol, and dipentaerythritol.

Among the aforementioned examples of an aliphatic polythiol, which may have a hetero atom, a polythiol, in which a moiety other than a thiol group is an aliphatic hydrocarbon, a polythiol derived from a halohydrin adduct of an alcohol through substitution of a halogen atom with a thiol group, a polythiol composed of a hydrogen sulfide reaction product of a polyepoxide compound, a thioglycolic acid ester, a mercapto fatty acid ester, and a thiol isocyanurate compound are preferable from the viewpoint of enhancement of adhesive strength; a mercapto fatty acid ester, and a thiol isocyanurate compound are more preferable; and a mercapto fatty acid ester is especially preferable. From the same viewpoint, a thiol free from a polysulfide group and a siloxane bond is also preferable.

### (Polythiol, in Which a Moiety Other Than Thiol Group is Aliphatic Hydrocarbon)

Examples of a polythiol, in which a moiety other than a thiol group is an aliphatic hydrocarbon, may include a C2 to C20 alkane dithiol.

Examples of the C2 to C20 alkane dithiol may include 1,2-ethanedithiol, 1,1-propanedithiol, 1,2-propanedithiol, 1,3-propanedithiol, 2,2-propanedithiol, 1,4-butanedithiol, 2,3-butanedithiol, 1,5-pentanedithiol, 1,6-hexanedithiol, 1,8-octanedithiol, 1,10-decanedithiol, 1,1-cyclohexanedithiol, and 1,2-cyclohexanedithiol.

### (Thioglycolic Acid Ester)

Examples of a thioglycolic acid ester may include 1,4-butanediol bis(thioglycolate), 1,6-hexanediol bis(thioglycolate), trimethylolpropane tris(thioglycolate), and pentaerythritol tetrakis(thioglycolate).

### (Mercapto Fatty Acid Ester)

As a mercapto fatty acid ester, a β-mercapto fatty acid ester having a primary thiol group is preferable from the viewpoint of enhancement of adhesive strength, and a β-mercaptopropionic acid ester of a polyhydric alcohol having from 2 to 6 hydroxy groups in a molecule is further preferable. Meanwhile, with respect to a mercapto fatty acid ester having a primary thiol group, the number of thiol groups in a molecule is preferably from 4 to 6 from the viewpoint of enhancement of adhesive strength, more preferably from 4 or 5, and further preferably 4.

Preferable examples of the β-mercaptopropionic acid ester having a primary thiol group may include tetraethylene glycol bis(3-mercaptopropionate) [EGMP-4], trimethylolpropane tris(3-mercaptopropionate) [TMMP], pentaerythritol tetrakis(3-mercaptopropionate) [PEMP], and dipentaerythritol hexakis(3-mercaptopropionate) [DPMP]. Among them, PEMP and DPMP are preferable, and PEMP is further preferable.

Examples of a β-mercaptopropionic acid ester having a secondary thiol group may include an ester between a polyhydric alcohol having from 2 to 6 hydroxy groups in a molecule and β-mercaptobutanoic acid, and specifically 1,4-bis(3-mercaptobutyryloxy)butane, and pentaerythritol tetrakis(3-mercaptobutyrate).

### (Thiol Isocyanurate Compound)

As a thiol isocyanurate compound prepared through a reaction between an isocyanurate compound and a thiol, a thiol isocyanurate compound having a primary thiol group is preferable from the viewpoint of enhancement of adhesive strength. With respect to a thiol isocyanurate compound having a primary thiol group, the number of thiol groups in a molecule is preferably from 2 to 4 from the viewpoint of enhancement of adhesive strength, and 3 is further preferable.

As the thiol isocyanurate compound having a primary thiol group, tris[(3-mercaptopropionyloxy)ethyl] isocyanurate (TEMPIC) is preferable.

### (Silicone Modified with Thiol Group)

Examples of a silicone modified with a thiol group may include a mercapto-modified silicone oil (for example, trade names KF-2001, KF-2004, and X-22-167B (Shin-Etsu Chemical Co., Ltd.), SMS042, and SMS022 (Gelest Inc. Inc.), PS849, and PS850 (United Chemical Technologies, Inc.)).

### (Aromatic Polythiol, Which May Have Hetero Atom)

Examples of an aromatic polythiol, which may be used as a polythiol compound (A) may include the following aromatic polythiols. As described above, the aromatic polythiols may have a hetero atom. Examples of an aromatic polythiol may include 1,2-dimercaptobenzene, 1,3-dimercaptobenzene, 1,4-dimercaptobenzene, 1,2-bis(mercaptomethyl)benzene, 1,3-bis(mercaptomethyl)benzene, 1,4-bis(mercaptomethyl)benzene, 1,2-bis(mercaptoethyl)benzene, 1,3-bis(mercaptoethyl)benzene, 1,4-bis(mercaptoethyl)benzene, 1,2,3-trimercaptobenzene, 1,2,4-trimercaptobenzene, 1,3,5-trimercaptobenzene, 1,2,3-tris(mercaptomethyl)benzene, 1,2,4-tris(mercaptomethyl)benzene, 1,3,5-tris(mercaptomethyl)benzene, 1,2,3-tris(mercaptoethyl)benzene, 1,2,4-tris(mercaptoethyl)benzene, 1,3,5-tris(mercaptoethyl)benzene, 2,5-toluenedithiol, 3,4-toluenedithiol, 1,3-di(*p*-methoxyphenyl)propane-2,2-dithiol, 1,3-diphenylpropane-2,2-dithiol, phenylmethane-1,1-dithiol, and 2,4-di(*p*-mercaptophenyl)pentane.

### -Polyisocyanate Compound (B)-

A polyisocyanate compound means herein a compound having two or more isocyanate groups in a molecule. An ingredient (B) may contain one, or two or more kinds of polyisocyanate compounds.

There is no particular restriction on the number of isocyanate groups in a molecule of an ingredient (B), insofar as the ratio (S/N) in an adhesion layer satisfies the aforementioned relationship.

Although the number of isocyanate groups in a molecule may be different in a case of a low molecular weight compound and in a case of a high molecular weight compound (for example, oligomer, or polymer), it may be from 2 to 70 from the viewpoint of enhancement of adhesive strength, preferably from 2 to 10, and more preferably from 3 to 7.

When an ingredient (B) is a high molecular weight compound, the number average molecular weight of an ingredient (B) may be, for example, 50000 or less from the viewpoint of enhancement of adhesive strength, preferably 40000 or less, and more preferably 35000 or less. Although there is no particular restriction on the lower limit of the number average molecular weight of an ingredient (B), the number average molecular weight of an ingredient (B) may be, for example, 2000 or more.

As an ingredient (B), a compound having a cyclic structure besides an isocyanate group in the molecule is preferable. When a compound having a cyclic structure is used as an ingredient (B), an adhesion layer with high heat resistance can be obtained.

There is no particular restriction on a cyclic structure, insofar as a ring is constituted, and examples of a cyclic structure may include an aliphatic ring structure, an aromatic ring structure, and a heterocyclic structure.

As an aliphatic ring structure, ring structures constituted with carbon except an aromatic ring structure may be used, and an aliphatic ring structure may be a saturated aliphatic ring structure, or an unsaturated aliphatic ring structure.

Specific examples of an aliphatic ring structure may include a monocyclic aliphatic ring structure, and more specifically a cycloalkane structure such as cyclohexane, and a cycloalkene structure such as cyclohexene. The number of carbon constituting a monocyclic aliphatic ring structure is, for example, in a range of from 3 to 20, preferably a range of from 4 to 12, more preferably a range of from 5 to 8, and most preferably 6.

An aliphatic ring structure is not limited to monocyclic one, and may be also a polycyclic aliphatic ring structure. Examples of a polycyclic aliphatic ring structure may include a polycyclic cycloalkane structure such as decalin, and a polycyclic cycloalkene structure such as norbornene. The number of carbon constituting each ring in a polycyclic aliphatic ring structure is, for example, in a range of from 3 to 20, preferably a range of from 4 to 12, and more preferably a range of from 5 to 8, and a polycyclic aliphatic ring structure having a six-membered ring is further preferable.

Examples of an aromatic ring structure may include an unsaturated cyclic structure with annularly aligned carbons having π electrons. Specific examples of an aromatic ring structure may include a monocyclic aromatic ring structure, such as benzene, and [4n+2] annulene (provided that n is from 1 to 4), as well as a polycyclic aromatic ring structure, such as naphthalene, azulene, indene, fluorene, and anthracene. Among the above, a monocyclic or polycyclic aromatic ring structure having a benzene ring (namely, a C6 aromatic ring) is preferable as an aromatic ring structure, and a monocyclic benzene ring structure is most preferable.

A heterocyclic structure is a heterocyclic structure constituted together with one or more hetero atoms, and may be monocyclic or polycyclic, and may be aliphatic or aromatic. A hetero atom means an atom constituting a ring structure other than carbon. Specific examples of a hetero atom may include a nitrogen atom, an oxygen atom, and a sulfur atom.

Specific examples of a heterocyclic structure may include a structure obtained through substitution of one or more (specifically, for example, from one to three) carbon atoms in the aliphatic ring structure or the aromatic ring structure with hetero atoms. The number of atoms constituting a monocyclic heterocyclic structure may be, for example, from 3 to 10, preferably a range of from 5 to 8, and most preferably 6. Meanwhile, the number of atoms constituting each ring in a polycyclic heterocyclic structure may be, for example, from 3 to 10, and preferably a range of from 5 to 8. As a polycyclic heterocyclic structure, one having a six-membered ring is further preferable.

The above aliphatic ring structure, aromatic ring structure, and heterocyclic structure may have a substituent further. Examples of such a substituent may include a (meth)acryloyl group as well as an oxygen atom (=O), a hydroxy group, an alkyl group, an alkoxy group, and an amino group

The substituent may be directly introduced to an atom constituting a cyclic structure, or introduced via a linking group. When there are two or more cyclic structures in a molecule of an ingredient (B), an atom constituting a cyclic structure and an atom constituting the other cyclic structure may be bonded by a single bond, or bonded via a linking group. Examples of the linking group may include an alkylene group, a carbonyl group, an ether bond, an ester bond, a sulfide bond, an amide bond, a urethane bond, and a urea bond.

An ingredient (B) may have only one kind of the cyclic structures in a molecule, or have two or more kinds thereof. Further, an ingredient (B) may have only a monocyclic structure in a molecule, or only a polycyclic structure, or may have both a monocyclic structure and a polycyclic structure.

The number of rings included in a molecule of an ingredient (B) may be, although it may be different between a case of a low molecular weight compound and a case of a high molecular weight compound, for example, from 1 to 100, or from 1 to 50, preferably from 1 to 20, and more preferably from 2 to 10.

When a polycyclic structure is included, for the "number of rings" all of the rings are counted. More specifically, in a case in which only one anthracene structure is present in a molecule as a cyclic structure, the "number of rings" is three.

As an ingredient (B) a compound having a nitrogen atom is preferable from the viewpoint of high film strength of an adhesion layer.

Examples of a compound having a nitrogen atom may include a compound having as a cyclic structure a heterocyclic structure including a nitrogen atom as a hetero atom, and a compound to which a substituent or a linking group including a nitrogen atom in atoms constituting a cyclic structure is bonded. In this case, a nitrogen atom included in the substituent or linking group may be directly bonded to an atom constituting the cyclic structure.

Specific examples of a compound having a nitrogen atom may include a compound having at least either of a urethane skeleton or an isocyanurate ring. As a compound having a nitrogen atom, a compound having both an isocyanurate ring, and a urethane bond is preferable from the viewpoint of favorable securement of both adhesive strength and heat resistance of an adhesion layer.

Examples of a compound having a urethane skeleton may include a urethane compound obtained by a reaction between an organic isocyanate compound and a hydroxy group-containing compound having one or more reactive functional group and a hydroxy group in the molecule. Further, a compound having a urethane skeleton may be a compound obtained by a reaction of an organic isocyanate compound with a hydroxy group-containing compound as well as, if necessary, at least one kind of diol selected out of an alkanediol, a polyether diol, a polybutadiene diol, a polyester diol, a polycarbonate diol, or an amide diol.

As a method of obtaining a urethane compound through a reaction between an organic isocyanate compound and a hydroxy-containing compound, a method known in the art may be applied.

Examples of an organic isocyanate compound may include an aromatic diisocyanate, such as toluene diisocyanate, diphenylmethane diisocyanate, diphenyldimethylmethane diisocyanate, dibenzyl diisocyanate, naphthylene diisocyanate, phenylene diisocyanate, xylene diisocyanate, and tetramethylxylylene diisocyanate; an aliphatic diisocyanate, such as tetramethylene diisocyanate, hexamethylene diisocyanate, lysine diisocyanate, 2-methylpentane-1,5-diisocyanate, 3-methylpentane-1,5-diisocyanate, and 2,2,4-trimethylhexamethylene-1,6-diisocyanate; and an alicyclic diisocyanate, such as isophorone diisocyanate, cyclohexane diisocyanate, hydrogenated xylylene diisocyanate, hydrogenated diphenylmethane diisocyanate, and hydrogenated trimethylxylylene diisocyanate. Further, a modified derivative thereof, such as an adduct modified derivative, a carbodiimide modified derivative, an allophanate-modified derivative, a biuret modified derivative, a uretdione modified derivative, a uretonimine modified derivative, and an isocyanurate modified derivative, may be included.

In a case in which a urethane compound is, for example, a methacrylate, examples of a hydroxy group-containing compound may include a hydroxy group-containing methacrylate, such as 2-hydroxyethyl methacrylate, 2-hydroxypropyl methacrylate, 4-hydroxybutyl methacrylate, glycerol dimethacrylate, trimethylolpropane dimethacrylate, pentaerythritol trimethacrylate, and dipentaerythritol pentamethacrylate.

Also in a case in which a urethane compound is a compound other than methacrylate, a compound corresponding to the hydroxy group-containing methacrylate (namely, a compound replacing a methacryloyl group in the hydroxy group-containing methacrylate with one of corresponding reactive functional groups) may be used as a hydroxy group-containing compound.

Examples of a compound having an isocyanurate ring may include one obtained by reacting a compound having an isocyanurate ring and a hydroxy group with a compound having a reactive functional group to react with a hydroxy group (for example, methacrylic acid).

Examples of a compound having an isocyanurate ring and a hydroxy group may include tris(2-hydroxyethyl)isocyanurate, and tris(hydroxymethyl)isocyanurate.

Specific examples of a compound having at least either of a urethane skeleton or an isocyanurate ring include the compounds expressed by the following structural formulas from (B-1) to (B-3) without limitation thereto.

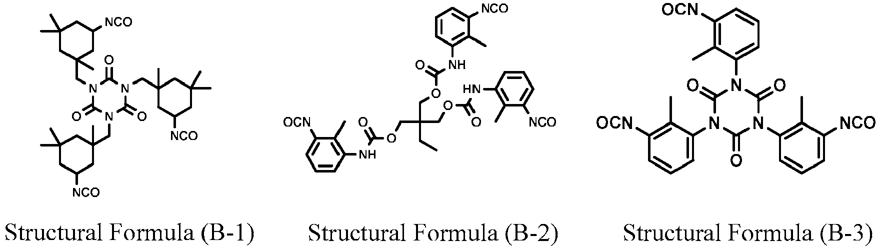

In this regard, an ingredient (B) is not limited to the above compounds, and it may be another compound insofar as it is a compound having two or more isocyanate groups.

Examples of a polyisocyanate having two or more isocyanate groups may include the aforementioned organic isocyanate compound.

### -Radical Generator (C)-

A radical generator means a compound that generates a radical by application of energy such as heat and light, and specifically a compound that acts on a thiol group of a polythiol compound (A) after being activated with heat or light, to generate a thiyl radical. In other words, an ingredient (C) is an ingredient to contribute to formation of a chemical bond at an interface with a rubber in an exterior component.

As a radical generator (C), a thermal radical generator is used. The thermal radical generator is preferable from the viewpoint of enhancement of adhesive strength, and more specifically a thermal radical generator that is a peroxide is used. Examples of a thermal radical generator that is a peroxide may include a thermal radical generator that is an organic peroxide, and a thermal radical generator that is an inorganic peroxide, and among them a thermal radical generator that is an organic peroxide is further preferable.

Among radical generators (C), a thermal radical generator that is a peroxide, a decomposition product of which has a boiling point of 150°C or higher, is used. The boiling point of a decomposition product of a thermal radical generator is more preferably 160°C or higher, and further preferably 180°C or higher.

In this regard, the "decomposition product" means a compound, which is formed as the consequence of decomposition of an ingredient (C) through activation by heat to generate a radical.

When a thermal radical generator that is a peroxide, a decomposition product of which has a boiling point of 150°C or higher is used as an ingredient (C), generation of a gas originated from an ingredient (C) may be suppressed in a production process for a tire. Therefore, a tire with less void at an interface between an obtained adhesion layer and an exterior component may be obtainable more easily.

In a case in which a radical generator (C) is a thermal radical generator, the one-minute half-life temperature is preferably 140°C or higher, more preferably from 150°C to 200°C, and further preferably from 160°C to 190°C.

Specific examples of an ingredient (C) are described below, provided that an ingredient (C) is not limited thereto.

Examples of a thermal radical generator that is an organic peroxide may include *t*-butyl 2-ethyl peroxy hexanoate, dilauroyl peroxide, 1,1,3,3-tetramethylbutyl peroxy-2-ethyl hexanoate, 1,1-di(*t*-hexylperoxy)cyclohexanone, di-*t*-butyl peroxide, *t*-butyl cumyl peroxide, 1,1-di(*t*-hexylperoxy)-3,3,5-trimethylcyclohexane, *t*-amyl peroxy-2-ethyl hexanoate, di(2-*t*-butyl peroxyisopropyl)benzene, di(*t*-butyl) peroxide, 1,1'-di(2-*t*-butyl peroxyisopropyl)benzene, benzoyl peroxide, 1,1'-di(*t*-butyl peroxy)cyclohexane, di(3,5,5-trimethylhexanoyl) peroxide, *t*-butyl peroxy neodecanoate, *t*-hexyl peroxy neodecanoate, and dicumyl peroxide. Among them, at least one of *t*-butyl 2-ethyl peroxy hexanoate, dilauroyl peroxide, 1,1,3,3-tetramethylbutyl peroxy-2-ethyl hexanoate, 1,1-di(*t*-hexyl peroxy)cyclohexanone, di-*t*-butyl peroxide, or *t*-butyl cumyl peroxide is preferable. Thermal radical generators that is an organic peroxide may be used singly or in combination of two or more kinds thereof.

Examples of a thermal radical generator that is an inorganic peroxide may include a redox generator that is a combination of an oxidizing agent and a reducing agent, such as a combination of a hydrogen peroxide and an iron (II) salt, and a combination of a persulfate and sodium hydrogen sulfite. Thermal radical generators that is an inorganic peroxide may be used singly or in combination of two or more kinds thereof.

Examples of a thermal radical generator that is a peroxide, a decomposition product of which has a boiling point of 150°C or higher, may include dicumyl peroxide, di-*t*-hexyl peroxide, di-*t*-octyl peroxide, cumyl-*t*-hexyl peroxide, cumyl-*t*-octyl peroxide, 1,3-bis(cumyl peroxyisopropyl)benzene, 1,3-bis(*t*-hexyl peroxyisopropyl)benzene, and 1,3-bis(*t*-octyl peroxyisopropyl)benzene.

### -Optional Ingredient-

A composition used in the first embodiment may further contain an optional ingredient. Examples of an optional ingredient may include a catalyst, a surface conditioner, a solvent, a binder, a filler, a pigment dispersing agent, a antistatic agent, electrical conducting material, a UV absorber, an antioxidant, an anti-drying agent, a penetrating agent, a pH adjuster, a sequestering agent, an antibacterial and antifungal agent, a surfactant, a plasticizer, a wax, and a leveling agent.

### (Thiourethanization Catalyst (D))

A composition used in the first embodiment may use a thiourethanization catalyst for promoting a reaction between an ingredient (A) and an ingredient (B) (hereinafter also referred to as "thiourethanization catalyst (D)").

As a thiourethanization catalyst (D), any optional catalyst may be used.

Examples of the thiourethanization catalyst may include an organic tin compound, such as dibutyltin dilaurate, dibutyltin diacetate, dibutyltin thiocarboxylate, dibutyltin dimaleate, dioctyltin thiocarboxylate, tin octenoate, and monobutyltin oxide; an inorganic tin compound, such as stannous chloride; an organic lead compound, such as lead octenoate; an amine, such as bis(2-dimethylaminoethyl)ether, *N,N,N*',*N*'-tetramethylhexamethylenediamine, triethylenediamine (TEDA), benzyldimethylamine, 2,2'-dimorpholinoethyl ether, and *N*-methylmorpholine; an organic sulfonic acid, such as *p*-toluenesulfonic acid, methanesulfonic acid, and fluorosulfuric acid; an inorganic acid, such as sulfuric acid, phosphoric acid, and perchloric acid; a base, such as sodium alcoholate, lithium hydroxide, aluminum alcoholate, and sodium hydroxide; a titanium compound, such as tetrabutyl titanate, tetraethyl titanate, and tetraisopropyl titanate; a bismuth compound; and a quaternary ammonium salt.

Among them, the amines are preferable as a thiourethanization catalyst, and triethylenediamine (TEDA) is more preferable. The catalysts may be used singly or in combination of two or more kinds thereof.

### (Surface Conditioner (E))

If necessary, a composition used in the first embodiment may contain a surface conditioner (hereinafter also referred to as "surface conditioner (E)"). As a surface conditioner (E), any optional surface conditioner may be used. Examples of the surface conditioner may include an acrylic type, a vinyl type, a silicone type, a fluorine type, and a silicone acrylate type. Among them, a silicone acrylate type is preferable as a surface conditioner (E) from the viewpoint of compatibility and surface tension reduction power.

### (Solvent)

If necessary, a composition used in the first embodiment may contain a solvent. There is no particular restriction on a solvent, insofar as it does not react with other ingredients to be blended, and examples thereof may include an aromatic solvent and an aliphatic solvent.

Specific examples of an aromatic solvent may include toluene, and xylene. Specific examples of an aliphatic solvent may include hexane, butyl acetate, and MEK (methyl ethyl ketone).

### -Content of Each Ingredient-

There is no other restriction on the content of each ingredient in the first embodiment, insofar as they are blended such that the ratio (S/N) in an adhesion layer becomes three or more. The contents may be selected appropriately in a range not to impair the effect of the invention.

a ratio (Iso/SH) of a total mole number (Iso) of isocyanate groups contained in a polyisocyanate compound (B) to a total mole number (SH) of thiol groups contained in a polythiol compound (A) is preferably 0.22 or less

Throughout the current description, "SH" represents the total mole number of thiol groups contained in a polythiol compound (A), and "Iso" represents the total mole number of isocyanate groups contained in a polyisocyanate compound (B). Further, the "ratio (Iso/SH)" represents a proportion of the total mole number (Iso) of isocyanate groups contained in the polyisocyanate compound (B) with respect to the total mole number (SH) of thiol groups contained in the polythiol compound (A) (namely, ratio (Iso/SH) = Iso/SH).

In a case in which the ratio (Iso/SH) is 0.22 or less, the proportion of thiol groups in an ingredient (A) with respect to isocyanate groups in an ingredient (B) is high compared to a case in which the ratio is larger than 0.22, so that the amount of thiol groups, which have survived without reacting with an isocyanate group, becomes large. As the consequence, a thiol-ene reaction occurs adequately between a thiol group and a carbon-carbon double bond in a rubber, and a high interfacial adhesive strength at an interface between an adhesion layer and a rubber of an exterior component is apt to be obtained.

The ratio (Iso/SH) of the total mole number (Iso) of isocyanate groups contained in a polyisocyanate compound (B) to the total mole number (SH) of thiol groups contained in a polythiol compound (A) is preferably 0.075 or more.

When the ratio (Iso/SH) is 0.075 or more, the film strength of an adhesion layer becomes higher compared to a case with the ratio less than 0.075.

The ratio (Iso/SH) is preferably from 0.075 to 0.22 from the viewpoint of attainment of a favorable adhesive strength, and more preferably from 0.1 to 0.2.

In this regard, the "total mole number (SH) of thiol groups contained in a polythiol compound (A)" may be calculated by multiplying the mole number of a polythiol compound (A) by the number of thiol groups present in a molecule of the polythiol compound (A). In other words, the "total mole number (SH) of thiol groups contained in a polythiol compound (A)" means the total amount of thiol groups in the total amount of polythiol compounds (A) contained in the composition, and not the number of thiol groups in a molecule of a polythiol compound.

Meanwhile, the "total mole number (Iso) of isocyanate groups contained in a polyisocyanate compound (B)" may be found by dividing an addition amount by the theoretical molecular weight, and multiplying the quotient by the number of reactive functional groups present in a molecule of the polyisocyanate compound (B). In other words, the "total mole number (Iso) of isocyanate groups contained in a polyisocyanate compound (B)" means the total amount of isocyanate groups in the total amount of polyisocyanate compound (B) contained in the composition, and not the number of isocyanate groups in a molecule of a polyisocyanate compound (B).

In this regard, the total mole number (Iso) of isocyanate groups present in a polyisocyanate compound (B) may be found by a measurement by the method of JIS K 1603-1B.

In a case in which the total mole number (SH) of thiol groups, or the total mole number (Iso) of the isocyanate groups is determined after formation of an adhesion layer, an (SH) value, and an (Iso) value may be found by the above methods, after confirming the molecular structures and the contents of an ingredient (A) and an ingredient (B) contained in the composition before conversion to an adhesion layer, for example, by conducting measurements on the adhesion layer by a measurement technique known in the art, such as a NMR measurement and an IR measurement.

The ratio (radical generator (C)/thiol group) of the total mole number of a radical generator (C) added in a composition to the total mole number of thiol groups contained in the polythiol compound (A) is preferably 0.025 or more. From this an adequate adhesive strength (especially interfacial adhesive strength) may be exhibited. From the same viewpoint, the ratio (radical generator (C)/thiol group) is preferably 0.03 or more, further preferably 0.035 or more, and especially preferably 0.04 or more. From the viewpoint of enhancement of adhesive strength, the ratio (radical generator (C)/thiol group) is preferably 0.80 or less, further preferably 0.70 or less, and especially preferably 0.60 or less.

As described above, a composition may contain a thiourethanization catalyst (D). The content of a thiourethanization catalyst (D) in a composition is preferably from 0.00001 part by mass to 5 parts by mass with respect to 100 parts by mass of an ingredient (B) from the viewpoint of enhancement of the film strength of an adhesion layer through adequate promotion of a thiourethanization reaction between an ingredient (A) and an ingredient (B), further preferably from 0.0001 part by mass to 0.5 part by mass, and especially preferably from 0.001 part by mass to 0.1 part by mass.

As described above, a composition may contain another optional ingredient (for example, surface conditioner (E), and solvent) in addition to the ingredients from (A) to (C), and the optional ingredient (D). However, from the viewpoint of strong adhesion of a rubber (especially, vulcanized rubber), the total content of the ingredients from (A) to (D) with respect to the total ingredients except a solvent of the composition (namely, solid ingredients) is preferably 80% by mass or more, more preferably 90% by mass or more, further preferably 95% by mass or more, and especially preferably 98% by mass or more.

From the same viewpoint, the total content of the ingredients from (A) to (E) with respect to the total ingredients except a solvent of the composition is preferably 90% by mass or more, more preferably 95% by mass or more, further preferably 99% by mass or more, and especially preferably 100% by mass.

Although there is no particular restriction on the amount of a solvent included in a composition, its content with respect to the total contents is preferably 50% by mass or less from the viewpoint of reduction of work load in a drying step, *etc.* in a production process of a tire, and more preferably 30% by mass or less.

### <<Exterior Component>>

A tire of the first embodiment has an exterior component. "Exterior component" means herein a component that is placed on the external side of a tire frame to cover at least part of the external surface of a tire frame. In the case of a tire of the first embodiment, an exterior component is placed on the external surface of a tire frame via the aforementioned adhesion layer.

Examples of an exterior component may include a tread component place on a crown area of a tire frame, and a side component placed on a side area of a tire frame. Meanwhile, an exterior component is not required to constitute an outermost layer of a tire, and for example a decorative layer or a protection layer may be additionally provided on the external surface of an exterior component.

An exterior component contains a rubber, and at least part of the rubber contacts an adhesion layer.

There is no particular restriction on a rubber contained in an exterior component, and examples thereof may include a natural rubber (NR); a conjugated diene synthetic rubber, such as a polyisoprene synthetic rubber (IR), a polybutadiene rubber (BR), a styrene/butadiene copolymer rubber (SBR), an acrylonitrile/butadiene rubber (NBR), a chloroprene rubber (CR), and a butyl rubber (IIR); an ethylene/propylene copolymer rubber (EPM); an ethylene/propylene/diene copolymer rubber (EPDM); and a polysiloxane rubber. They may be used singly, or in combination of two or more kinds thereof. Among them, a natural rubber (NR), and a blend (SBR/NR) of a natural rubber and a styrene/butadiene copolymer rubber are preferable from the viewpoint of adhesive strength with an adhesion layer.

An exterior component is only required to include at least a rubber, and may be also composed of a rubber composition, in which other ingredients such as an additive are added to a rubber according to need.

Examples of an additive may include a reinforcement material such as carbon black, a filler, a vulcanizing agent, a vulcanization accelerator, a fatty acid or a salt thereof, a metallic oxide, a process oil, and an anti-aging agent, and they may be added appropriately.

An exterior component is obtained, for example, by placing an unvulcanized exterior component, in which a rubber contained therein is in an unvulcanized state, through the intermediary of a composition layer on a tire frame, and by vulcanizing the rubber by heating. In other words, an exterior component placed on a tire frame through the intermediary of an adhesion layer is obtained, for example, by heating at least part of unvulcanized rubber contained in an unvulcanized exterior component in a state in contact with a composition layer such that the unvulcanized rubber is vulcanized.

In this regard, "unvulcanized exterior component" means an exterior component, in which a rubber ingredient is contained in an unvulcanized state, and which may contain an ingredient other than rubber (for example, resin).

In a case in which an exterior component is a tread component, the same is preferably neither too soft, nor too hard from the viewpoint of adequate development of performances as a tread. Specifically, the tensile modulus of a tread component is preferably from 0.1 to 100 MPa, further preferably from 0.1 to 50 MPa, and especially preferably from 0.1 to 5.0 MPa.

### <<Other Layer>>

A tire of the first embodiment may have, as described above, another layer such as an undercoat layer in addition to a tire frame, an adhesion layer, and an exterior component.

As an undercoat layer, there is for example a layer, which is formed from an adhesive with adhesiveness to a resin material contained in a tire frame, and is placed between a tire frame and an adhesion layer such that the same contacts both at least part of surface of a tire frame, and a surface of an adhesion layer.

In other words, a tire of the first embodiment may be a tire including a tire frame, which is toric and is formed from a resin material containing a thermoplastic resin; an undercoat layer, which is formed from an adhesive with adhesiveness to the resin material, and is placed in contact with at least part of surface of the tire frame; an adhesion layer, which is formed from a composition including a polythiol compound, a polyisocyanate compound, and a radical generator, which is placed in contact with the undercoat layer, and in which the ratio (S/N) of the number (S) of sulfur atoms contained in the adhesion layer to the number (N) of nitrogen atoms contained in the adhesion layer is three or more; and an exterior component, which contains a rubber, and which is mounted on the tire frame through the intermediary of the undercoat layer, and the adhesion layer such that at least part of the rubber touches the adhesion layer.

When a tire has an undercoat layer as above, detachment of an exterior component from the tire frame may be suppressed further.

In this regard, whether an adhesive is "with adhesiveness to a resin material contained in a tire frame" may be confirmed as bellow.

Specifically, a layered body, in which the resin materials contained in a tire frame are bonded together via an adhesive, is prepared, and the peel strength (N/25 mm) at 25°C is measured by pulling the ends of the layered body at a pulling rate of 50 mm/min in a 180° direction. In a case in which the found peel strength by the measurement is 100 (N/25 mm) or more, the adhesive may be judged as "with adhesiveness to a resin material contained in a tire frame".

There is no particular restriction on an adhesive with adhesiveness to a resin material contained in a tire frame, insofar as the above condition is satisfied. However, from the viewpoint of adhesive strength, for example, a solvent dilution type halogenated rubber adhesive is preferable. As a solvent dilution type halogenated rubber adhesive, for example, CHEMLOK 2000, METALOC PH56, *etc.* may be favorably used from the viewpoint of adhesive strength.

There is no particular restriction on the thickness of an undercoat layer, and it may be selected appropriately according to the type of an adhesive, or the like. From the viewpoint of suppression of detachment of an exterior component, it is preferably from 10 µm to 1000 µm, and more preferably from 20 µm to 200 µm.

### <<Constitution of Tire>>

A tire according to the first embodiment of the invention will be described below referring to drawings.

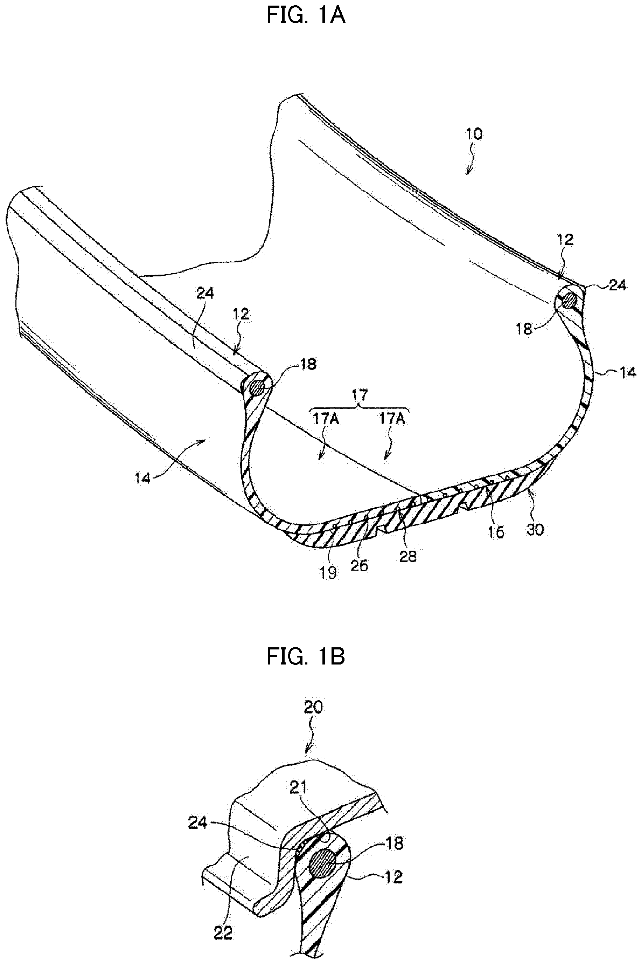

A tire 10 of the present embodiment will be described. Figure 1A is a perspective view depicting a cross-section of a part of a tire according to the First embodiment. Figure 1B is a cross-sectional view of a bead area fit into a rim. As depicted in Figure 1A, the tire 10 of the embodiment exhibits nearly the same cross-sectional shape as a conventional rubber-made pneumatic tire.

As depicted in Figure 1A, the tire 10 is provided with a tire case 17 (tire frame) constituted with a pair of bead areas 12, which contact a bead sheet 21 and a rim flange 22 of a rim 20 depicted in Figure 1B; side areas 14 extending from a bead area 12 outward in the radial direction of the tire; and a crown area 16 (outer circumference area) connecting the outer end in the radial direction of the tire of an side area 14 and the outer end in the radial direction of the tire of the other side area 14.

In this regard, as a resin material for the tire case 17 of the embodiment, for example, a resin composition, which contains a thermoplastic resin, and to which various additives are added, may be used.

Although the tire case 17 according to the embodiment is formed from a single resin material, the invention is not limited the constitution, and a thermoplastic resin material with different characteristics may be used for each area of the tire case 17 (side area 14, crown area 16, bead area 12, *etc*.) identically with a conventional rubber-made pneumatic tire. Further, a reinforcing material (for example, a fiber, a cord, a nonwoven fabric, or a woven fabric, made of a polymeric material or a metal) may be embedded in the tire case 17 (for example, bead area 12, side area 14, or crown area 16) for reinforcing the tire case 17 therewith.

Although a tire frame is formed from a single resin material according to the embodiment, a tire frame may be constituted by combining plural materials with respect to a crown area, a side area, *etc.* of the tire frame.

Although, in doing so, the thickness of the crown area of a tire frame may be selected appropriately for adjustment of the flexural modulus, it is preferably from 0.5 mm to 10 mm considering the tire weight, *etc*., further preferably from 1 mm to 5 mm, and especially preferably from 1 mm to 4 mm. Similarly, the thickness of the side area of a tire frame is further preferably from 0.5 mm to 10 mm, and especially preferably from 1 mm to 5 mm. The thicknesses of the crown area and the side area of a tire frame may be based on the average thickness of a specimen used for measuring the flexural modulus. The thickness of a tire frame may be measured appropriately using a method and an apparatus known in the art.

The tire case 17 of the embodiment is obtained by jointing a pair of tire case halves (tire frame segments) 17A formed from a resin material together. The tire case 17 is formed from the tire case halves 17A with the same toric shape, each of which is molded by injection molding, *etc.* incorporating a bead area 12, a side area 14, and a half-width crown area 16 in one piece, by jointing the two face to face at the tire equatorial plane part. The tire case 17 is not limited to that formed by jointing two components, and may be formed by jointing three or more components.

The tire case half 17A formed from the resin material may be molded, for example, by vacuum molding, pressure molding, injection molding, melt casting, *etc.* Therefore, in contrast to a conventional case in which a tire case is molded with a rubber, vulcanization can be omitted and therefore the production process may be significantly simplified to shorten the molding time.

Moreover, since the tire case halves 17A have a bilaterally symmetric shape, namely a tire case half 17A and the other tire case half 17A have the same shape, there is an advantage that only 1 mold is enough for molding the tire case halves 17A.

In the embodiment as depicted in Figure 1B, an annular bead core 18 made of a steel cord is embedded in the bead area 12 identically with a conventional pneumatic tire. However, the invention is not limited to the constitution, and the bead core 18 may be omitted, insofar as the stiffness of the bead area 12 is secured, and the fitness with a rim 20 is acceptable. Instead of a steel cord, a bead core may be constituted with an organic fiber cord, a resin coated organic fiber cord, or a hard resin.

In the embodiment an annular sealing layer 24 made of a material, for example a rubber, with a sealing property superior to a resin material constituting the tire case 17, is formed at a part of the bead area 12 to contact the rim 20, or at least a part to contact a rim flange 22 of the rim 20. The sealing layer 24 may be also formed at a part where the tire case 17 (bead area 12) contacts the bead sheet 21. As the material with a sealing property superior to a resin material constituting the tire case 17, a material softer than a resin material constituting the tire case 17 may be used. As a rubber to be used for the sealing layer 24, the same kind of rubber as a rubber used for an outer surface of the bead area of a conventional rubber-made pneumatic tire is preferably used. In a case in which a favorable sealing property with respect to the rim 20 is secured using only a resin material to form the tire case 17, a rubber sealing layer 24 may be omitted, or another thermoplastic resin (thermoplastic resin elastomer) with a sealing property superior to the resin material may be used. Examples of such other thermoplastic resin may include a resin, such as a polyurethane resin, a polyolefin resin, a polystyrene thermoplastic resin, and a polyester resin; as well as a blend of the above resin with a rubber or an elastomer. Further, a thermoplastic resin elastomer may be also used, and examples thereof may include a polyester thermoplastic resin elastomer, a polyurethane thermoplastic resin elastomer, a polystyrene thermoplastic resin elastomer, and a polyolefin thermoplastic resin elastomer, as well as a combination between the elastomers, and a blend with a rubber.

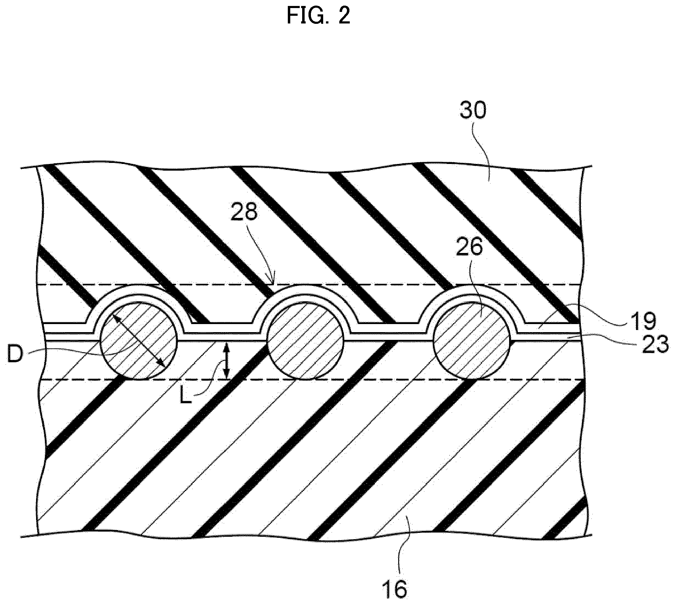

As depicted in Figure 1A, a reinforcing cord 26 having a stiffness higher than a resin material constituting the tire case 17 is wound up around the crown area 16 in the circumferential direction of the tire case 17. In a cross-sectional view along the axial direction of the tire case 17, the reinforcing cord 26 is wound up spirally in a state that the cord is at least partly embedded in the crown area 16. On the outer circumference in the tire radial direction of the reinforcing cord 26, for example, a rubber-made tread 30 is placed through the intermediary of an undercoat layer 23 (see Figure 2) formed from an adhesive having a favorable adhesive strength with respect to a resin material for the tire case 17, and an adhesion layer 19 formed from the aforementioned composition.

A reinforcing cord layer 28 formed by embedding at least partly the reinforcing cord 26 in the crown area 16 of the tire case 17 will be described referring to Figure 2.

Figure 2 is a cross-sectional view along the tire rotation axis depicting a state where a reinforcing cord is embedded in the crown area of a tire case of a tire according to the first embodiment. As depicted in Figure 2, the reinforcing cord 26 is wound up spirally in a state that the cord is at least partly embedded in the crown area 16 in a cross-sectional view along the axial direction of the tire case 17 to form a reinforcing cord layer 28, which is expressed by dashed lines in Figure 2 together with a part of outer circumference of the tire case 17. The portion of the reinforcing cord 26 embedded in the crown area 16 is in a state tightly pressed to a resin material constituting the crown area 16 (tire case 17). As the reinforcing cord 26, a monofilament (namely, single fiber) of a metal fiber, an organic fiber, *etc.,* or a twisted multifilament twisting the fibers including a steel cord with twisted steel fibers (namely, twisted wire) may be used. In the embodiment a steel cord is used as the reinforcing cord 26.

An embedded depth L in Figure 2 represents an embedded depth of the reinforcing cord 26 in the tire case 17 (crown area 16) toward the tire rotation axis. The embedded depth L of the reinforcing cord 26 in the crown area 16 is preferably 1/5 or more of the diameter D of the reinforcing cord 26, and more preferably beyond 1/2. Most preferably the entire reinforcing cord 26 is embedded in the crown area 16. When the embedded depth L of the reinforcing cord 26 exceeds 1/2 of the diameter D of the reinforcing cord 26, the reinforcing cord 26 is inhibited from bouncing out from the embedded area for a dimensional reason. Further, when the entire reinforcing cord 26 is embedded in the crown area 16, the surface (outer peripheral surface) becomes flat, so that entry of air in the surroundings of the reinforcing cord may be suppressed, even when a component is mounted on the crown area 16 where the reinforcing cord 26 is embed. In this regard, the reinforcing cord layer 28 is equivalent to a belt placed on an outer peripheral surface of a carcass of a conventional rubber-made pneumatic tire.

Meanwhile, on the outer circumference of the reinforcing cord layer 28 in the tire radial direction, a tread 30 is placed through the intermediary of the undercoat layer 23 and the adhesion layer 19. Specifically, an undercoat layer 23, an adhesion layer 19, and a tread 30 are provided in the mentioned order, for example, over both the surface of the reinforcing cord 26 placed in the crown area 16 and the surface of the crown area 16 where the reinforcing cord 26 is not present. In other words, in a region where the reinforcing cord 26 is not present, the undercoat layer 23 is in direct contact with the surface of the crown area 16. Further, the adhesion layer 19 is in direct contact with the undercoat layer 23, and a rubber of the tread 30 is in direct contact with the adhesion layer 19.

A rubber is used for the tread 30. The tread 30 preferably exhibits abrasion resistance superior to a resin material constituting the tire case 17. On the tread 30 a tread pattern configured with a plurality of grooves is formed in a contact area with road similarly to a conventional rubber-made pneumatic tire.

### <<Method of Producing Tire>>

A method of producing a tire according to the embodiment will be described below with an exemplary case using a thermal radical generator as the ingredient (C) of a composition.

A method of producing the tire according to the embodiment includes, for example, a green tire forming step of forming a green tire including a tire frame, a composition layer, which is formed from a composition, and an unvulcanized exterior component, and a heating step of heating the green tire. The unvulcanized exterior component contains an unvulcanized rubber, for example at least part of which is in contact with the composition layer, and is placed on the tire frame through the intermediary of the composition layer.

In this regard, the green tire of the embodiment contains an unvulcanized rubber in an exterior component. Namely, by heating the green tire, the unvulcanized rubber in the exterior component is vulcanized, and a composition layer is converted to an adhesion layer thereby yielding the tire of the embodiment.

### -Green Tire Forming Step-

### (Tire Case Forming Step)

Firstly, tire case halves are formed using a resin material containing a thermoplastic resin as described above. The tire case halves are preferably formed by injection molding. Next, the tire case halves are supported by a thin metal support ring face to face. Then a jointing mold, which touches the outer peripheral surface of of butting parts of the tire case halves, is installed (not illustrated). In this case, the jointing mold is configured such that the areas around the joints (butting parts) of the tire case halves 17A are pressed at a predetermined pressure. Then the areas around the joints of the tire case halves are pressed at not less than the melting point (or softening point) of a resin material constituting the tire case. When the joints of the tire case halves are heated and pressed by the jointing mold, the joints are melted to weld together the tire case halves to unite the components in one piece to complete the tire case 17. Although in the current embodiment the joints of the tire case halves are heated using a jointing mold, the invention is not limited thereto, and for example, the joints may be heated with a radio frequency heating apparatus installed separately, or the tire case halves may be jointed by softening or melting the halves in advance by hot air, infrared light, or the like, followed by pressing with a jointing mold.

### (Reinforcing Cord Component Winding Step)

Next, the reinforcing cord layer 28 may be formed on the outer circumference of the crown area 16 of the tire case 17 by winding and embedding a preheated reinforcing cord 26 from a cord feeder (not illustrated) provided with a reel with a wound up reinforcing cord 26, a cord heater, various rollers, *etc.,* on the outer peripheral surface of the crown area 16.

### (Composition Layer Forming Step)

Next, on the crown area 16 of the tire case 17 where the reinforcing cord 26 has been wound up, a composition layer is formed. According to the embodiment there is an undercoat layer 23 formed from an adhesive having adhesiveness to a resin material. Therefore, a composition layer is formed on the crown area 16 of the tire case 17, where the reinforcing cord 26 has been wound up, through the intermediary of a layer of the adhesive having adhesiveness to a resin material. "Layer of an adhesive having adhesiveness to a resin material", which is a state before the layer is converted to an undercoat layer 23 by heating, may be hereinafter occasionally referred to as "prime coat layer".

In a case in which a composition layer is a layer of a coated film, a composition layer may be yielded by painting a composition on the prime coat layer formed on the crown area 16 of the tire case 17 where the reinforcing cord 26 has been wound up.

For example, as a coating method of painting a composition, there are a spray coating method, a dip coating method, and a spin coating method, without particular limitation thereto.

Further, the thickness, shape, dimension, *etc.* of a coated film may be decided appropriately according to the intended thickness of an adhesion layer, *etc.*

In a case in which a composition layer is a layer of an adhesive composition film, a composition layer may be yielded, for example, by painting a composition on a prime coat layer to form a coated film, and then converting the coated film to a film to form an adhesive composition film.

Also, in a case in which a composition layer is a layer of an adhesive composition film, a composition layer may be yielded, for example, using a support such as a release sheet. Specifically, for example, an adhesive composition film may be formed on the support, which is then made contact to the prime coat layer formed on the crown area 16 of the tire case 17 where the reinforcing cord 26 has been wound up, and then the support is released.

Further, for example, a coated film of a composition, and a prime coat layer are formed on a support one after another, and the coated film is converted to a film as an adhesive composition film, and the layered product may be bonded such that the prime coat layer contacts the crown area 16 of the tire case 17 where the reinforcing cord 26 has been wound up, and then the support is released. Further, for example, a coated film of a composition is formed on a support, which is converted to a film and a prime coat layer is formed on the obtained adhesive composition film, and the layered product may be bonded such that the prime coat layer contacts the crown area 16 of the tire case 17 where the reinforcing cord 26 has been wound up, and then the support is released.

There is no particular restriction on the support, and examples thereof may include a sheet-formed support such as a release sheet and a seating. The thickness or the shape of the support may be decided appropriately corresponding to the shape, *etc.* of an adhesive composition film to be formed.

Examples of a material to be used for a sheet-formed support may include a paper, a resin, a paper coated with a resin, and a metal.

Examples of a material to be used for a resin-made release sheet may include a polyester resin, such as poly(ethylene terephthalate), poly(cyclohexylene terephthalate), and poly(ethylene naphthalate); a polyamide resin, such as nylon 46, modified nylon 6T, nylon MXD6, and polyphthalamide; a ketone type resin, such as poly(phenylene sulfide), and poly(thioether sulfone); and a sulfone resin, such as polysulfone, and polyethersulfone. As a release sheet, a transparent resin substrate containing as a main ingredient an organic resin, such as polyethernitrile, polyalylate, polyetherimide, poly(amide imide), polycarbonate, poly(methyl methacrylate), triacetyl cellulose, polystyrene, and poly(vinyl chloride), may be used favorably.

Further, as the support, a rubber component for a tread, which yields the tread 30 by heating as described below, may be used. In this case, it is not necessary to release the support, and a green tire is complete when the respective layers are made contact with each other and bonded together.

A method of converting a coated film of a composition into a film may be selected appropriately corresponding to the formulation and characteristics of a composition. For example, when a composition containing a thiourethanization catalyst (D) is used as the composition, a coated film forms a film to yield an adhesive composition film by leaving a coated film standing at room temperature for a predetermined time. The film may be heated, insofar as the ingredient (C) in the composition is not activated. From this viewpoint, the coated film is preferably left standing at a temperature from 0°C to 60°C, and more preferably from 15°C to 40°C. The stationary time is preferably one min or longer, and more preferably three min or longer from the viewpoint of shape stability allowing retention of the shape of an adhesive composition film.

### (Exterior Component Mounting Step)

Next, a rubber component for a tread (not illustrated) is mounted on the tire case 17, on which a composition layer is formed. The rubber component for a tread is an unvulcanized exterior component, which contains at least an unvulcanized rubber, and by heating the same for vulcanizing the unvulcanized rubber a tread 30 containing a vulcanized rubber is obtained. There is no particular restriction on the formation method and mounting method of a rubber component for a tread. For example, a belt-shaped rubber component for a tread having a tread pattern configured with a plurality of grooves in a contact area with road surface is formed in advance by injection molding. Then, the rubber component for a tread is wound around the tire case 17, such that a rubber in the rubber component for a tread touches directly a composition layer formed on the tire case 17.

Thus, a green tire including a tire case 17, a composition layer, and a rubber component for a tread is obtained.

### - Heating Step-

Next, the obtained green tire is heated.

The heating temperature is, for example, preferably from 150°C to 220°C, and further preferably from 160°C to 200°C. The rubber component for a tread is preferably pressurized during vulcanization, and the pressure is especially preferably from 0.1 MPa to 20 MPa. The heating time is preferably from one min to 60 min, and further preferably from 5 min to 30 min.

When the boiling point of a decomposition product of the ingredient (C) contained in the composition is 150°C or higher, the heating temperature for heating a green tire in the heating step is preferably lower than the boiling point of a decomposition product of the ingredient (C) by 10°C or more from the viewpoint of reduction of voids at an interface between an adhesion layer and an exterior component, and more preferably lower by 20°C or more. Namely, if the boiling point of a decomposition product of the ingredient (C) is B (°C), the heating temperature is preferably B-10 (°C) or lower, and more preferably B-20 (°C) or lower.

When plural kinds of compounds are generated as decomposition products of the ingredient (C), the boiling point of the decomposition product having the lowest boiling point is used as "B (°C)".

The heating is preferably conducted in a state where at least part of unvulcanized rubber contained in a rubber component for a tread is in direct contact with a composition layer. By the heating, the composition layer is converted to an adhesion layer 19, and an unvulcanized rubber in the rubber component for a tread is vulcanized to form a tread 30.

When a sealing layer 24 composed of a vulcanized rubber is bonded to the bead area 12 of the tire case 17 using an adhesive, *etc.,* the tire 10 is completed.

### (Action)

Since the tread 30 is placed on the tire case 17 through the intermediary of the adhesion layer 19 in the tire 10 of the embodiment, the tread 30 (exterior component) is not apt to detach from the tire case 17. Further, since the tire case 17 in the tire 10 is formed from a resin material containing a thermoplastic resin, its structure may be simple and the weight is less than a conventional rubber-made tire. Therefore, the tire 10 of the embodiment has higher resistance to friction and durability. Further, since the tire case 17 and the tread 30 may be produced by injection molding, the productivity can be excellent.

Since a reinforcing cord 26 with a stiffness higher than a resin material is wound spirally in the circumferential direction on the outer circumferential surface of the crown area 16 of a tire case 17 formed from the resin material in the tire 10 of the embodiment, the puncture resistance, the cutting resistance, and the circumferential stiffness of the tire 10 are improved. When the circumferential stiffness of the tire 10 is improved, creeping of a tire case 17 formed from the resin material is prevented.

As seen from a cross-sectional view along an axial direction of the tire case 17 (a cross-section depicted in Figure 1A), a reinforcing cord 26 is at least partly embedded into the outer peripheral surface of the crown area 16 of the tire case 17 formed from a resin material and adheres tightly to the resin material, and therefore entry of air during production may be suppressed, or movement of the reinforcing cord 26 by power input in traveling may be suppressed. As the result, occurrence of detachment, or the like of the reinforcing cord 26, the tire case 17, and the tread 30 may be suppressed to improve the durability of the tire 10.

Since, as depicted in Figure 2, the embedded depth L of the reinforcing cord 26 is 1/5 or more of the diameter D, entry of air during production is effectively suppressed, and movement of the reinforcing cord 26 by power input in traveling may be suppressed further.

Further, since an annular bead core 18 made of a metal material is embedded in the bead area 12, the tire case 17, namely the tire 10 may be firmly retained by the rim 20 similarly to a conventional rubber-made pneumatic tire.

Further, since a sealing layer 24 composed of a rubber material with a sealing property superior to a resin material constituting the tire case 17 is placed at a part of the bead area 12 in contact with the rim 20, the sealing property between the tire 10 and the rim 20 is improved. As the result, air leakage from the inside of the tire may be further suppressed compare to a case, in which sealing is performed with only the rim 20 and the resin material constituting the tire case 17. Moreover, when the sealing layer 24 is placed, the rim fittability is also improved.

According to the first embodiment, the reinforcing cord 26 is configured to be heated, however, for example, it may be also configured that the outer circumference of the reinforcing cord 26 is coated with the same resin material as the tire case 17. In this case, in winding the coated reinforcing cord around the crown area 16 of the tire case 17, entry of air in embedding the reinforcing cord 26 into the crown area 16 can be suppressed effectively by heating the coated resin material together with the reinforcing cord 26. When a tread 30 is placed on an outer circumferential surface of the layer of the resin material coating the outer circumference of the reinforcing cord 26 via an undercoat layer 23 and an adhesion layer 19, a tire 10 in which the tread 30 is hardly detached from the tire case 17 may be obtained.

Although it is easier to wind up the reinforcing cord 26 spirally from the production standpoint, a method of winding the reinforcing cord 26 allowing discontinuity in the width direction is also conceivable.

Although the reinforcing cord 26 is wound around the crown area 16 according to the embodiment, a form omitting the reinforcing cord is also possible. In other words, a form, in which an undercoat layer 23 is placed directly on the crown area 16 of the tire case 17, and the tread 30 is placed via the undercoat layer 23 and the adhesion layer 19, is also possible.

The tire 10 of the first embodiment is a so-called tubeless tire, in which an air chamber is formed between the tire 10 and the rim 20 by mounting the bead area 12 on the rim 20, however the invention is not limited to such a constitution, and the tire 10 may have a complete tube form.

### [Second Embodiment]

Next, a tire according to the second embodiment of the invention will be described below referring to drawings.

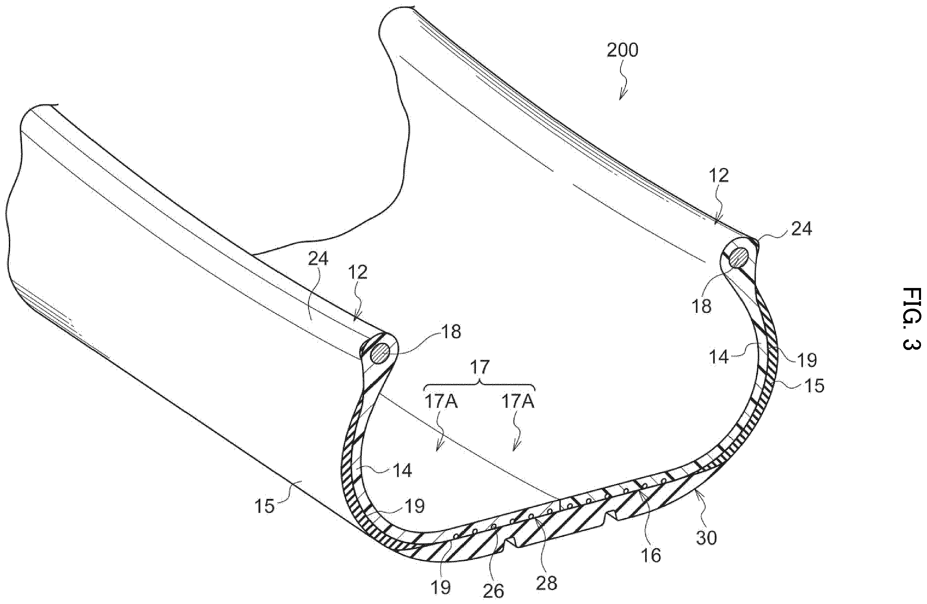

A tire 200 of the present embodiment will be described. Figure 3 is a perspective view depicting a cross-section of a part of a tire according to the second embodiment. As depicted in Figure 3, in contrast to the tire 10 of the first embodiment, in the tire 200 of the embodiment side components 15 are provided as exterior components outside in the width direction of both the side areas 14. In this regard, the side component 15 is placed on the side area 14 of the tire case 17 via an undercoat layer 23 (not illustrated in Figure 3) and an adhesion layer 19. In Figure 3, a component common to Figure 1 is denoted with the same reference sign, and repeated explanation is omitted.

In the tire 200 of the embodiment, the side component 15 is placed as an exterior component in addition to the tread 30 on the surface of the side area 14. The side component 15 is formed from the same material as the tread 30, namely with a rubber. It is preferable that the side component 15 is superior in abrasion resistance similarly as the tread 30 compared to a resin material constituting the tire case 17. The side component 15 is provided on the surface of the side area 14 via the undercoat layer 23 and the adhesion layer 19.

The side component 15 may be formed by injection molding similarly to the tread 30. Specifically, for example, a rubber component for a side component, which is formed into an intended shape in advance by injection molding, *etc.,* is mounted on the surface of the side area 14 of the tire case 17 via a prime coat layer and a composition layer. By heating them, an unvulcanized rubber contained in the rubber component for a side component is vulcanized to form a side component 15.

As seen in Figure 3, the edge directed to the crown area 16 of the side component 15 is bonded overlapping the edge of the tread 30 according to the embodiment. In this case the edge directed to the crown area 16 of the side component 15 is preferably placed on the radially inner side of the tire compared to the edge of the tread 30.

The tread 30 and the side component 15 may be configured such that the interface between the overlapped edges may be welded. Namely, firstly a rubber component for a tread is placed on the crown area 16 of the tire case 17 via a prime coat layer and a composition layer, and a rubber component for a side component is placed on the side area 14 via a prime coat layer and a composition layer to form a green tire. A composition layer may be placed at an interface where the edge of the rubber component for a tread and the edge of the rubber component for a side component contact each other. Then by heating the obtained green tire, unvulcanized rubber contained in the respective rubber components is vulcanized, and the composition layer is converted to an adhesion layer, so that a tire 200, in which the tread 30, and the side component 15 hardly detach from the tire case 17, may be obtained.

Although a mode in which the side components 15 are provided on both the surfaces of the side areas 14 of the tire case 17 is presented in the current embodiment, a tire according to the invention is not limited to the embodiment, and also a mode, in which the side component 15 is provided only on one side in the width direction of the tire 200, is also possible.

A tire according to the first embodiment and a tire according to the second embodiment include the following modes of tires.
<A1> A tire including:
   a tire frame, which is toric and is formed from a resin material containing a thermoplastic resin,
   an adhesion layer, which is formed from a composition comprising a polythiol compound, a polyisocyanate compound, and a radical generator, and in which a ratio (S/N) of a number (S) of sulfur atoms contained in the adhesion layer to a number (N) of nitrogen atoms contained in the adhesion layer is three or more, and
   an exterior component, which contains a rubber, and which is mounted on the tire frame via the adhesion layer such that at least part of the rubber touches the adhesion layer,
   wherein the radical generator is a thermal radical generator that is a peroxide, and
   a boiling point of a decomposition product of the thermal radical generator that is the peroxide is 150°C or higher.
<A2> The tire according to claim 1, wherein a ratio (Iso/SH) of a total mole number (Iso) of isocyanate groups contained in the polyisocyanate compound to a total mole number (SH) of thiol groups contained in the polythiol compound is 0.22 or less.
<A3> The tire according to <A1> or <A2>, wherein a ratio (Iso/SH) of a total mole number (Iso) of isocyanate groups contained in the polyisocyanate compound to a total mole number (SH) of thiol groups contained in the polythiol compound is 0.075 or more.
<A4> The tire according to according to any one of <A1> to <A3>, wherein the polyisocyanate compound includes at least one of an aromatic ring, an aliphatic ring, or a heterocyclic ring.
<A5> The tire according to according to any one of <A1> to <A4>, wherein a thickness of the adhesion layer is from 10 µm to 1000 µm.
<A6> The tire according to according to any one of <A1> to <A5>, wherein the composition further comprises a thiourethanization catalyst.
<A7> A method of producing the tire according to any one of <A1> to <A6>, the method comprising:
   a green tire forming step of forming a green tire for forming a green tire including a tire frame, which is toric and is formed from a resin material containing a thermoplastic resin; a composition layer, which is formed from a composition including a polythiol compound, a polyisocyanate compound, and a thermal radical generator including a peroxide, a decomposition product of which has a boiling point of 150°C or higher; and an unvulcanized exterior component, which contains an unvulcanized rubber and which is mounted on the tire frame via the composition layer such that at least part of the unvulcanized rubber touches the composition layer; and
   a heating step of vulcanizing the unvulcanized rubber contained in the exterior component, and activating the thermal radical activator contained in the composition layer, by heating the green tire.
<A8> The method of producing the tire according to <A7>, wherein a temperature for heating the green tire in the heating step is B-10 (°C) or lower, wherein B (°C) represents the boiling point of the decomposition product of the thermal radical generator.

### [Third Embodiment]

A tire according to the third embodiment includes a tire frame, which is toric and is formed from a resin material containing a thermoplastic resin; an adhesion layer, which is obtained by heating a composition layer formed from a composition including a polythiol compound (hereinafter also referred to as "polythiol compound (A)"), a compound having a functional group reactive with a thiol group (hereinafter also referred to as "compound having a functional group reactive with a thiol group (B')", or "compound (B')"), and a thermal radical generator including a peroxide, a decomposition product of which has a boiling point of 150°C or higher (hereinafter also referred to as "thermal radical generator (C')"); and an exterior component, which contains a vulcanized rubber obtained by vulcanizing an unvulcanized rubber at least partly contacting the composition layer, and which is provided on the tire frame via the adhesion layer.

Throughout the current description, a polythiol compound (A), a compound (B') having a functional group reactive with a thiol group, and a thermal radical generator (C'), as well as a catalyst (D') described below, and a surface conditioner (E) may be occasionally referred to respectively as an ingredient (A), an ingredient (B'), an ingredient (C'), an ingredient (D'), and an ingredient (E).

Further, a "functional group reactive with a thiol group" contained in the ingredient (B') may be occasionally referred to as a "reactive functional group".

A "decomposition product of a thermal radical generator" means a compound generated, because a thermal radical generator is thermally activated and decomposed to generate a radical.

When a resin material is used for a tire frame, various materials may be selected as a resin, on condition that the selected material exhibits performances required for a tire.

Further, when an adhesive is used for fixing an exterior component to a tire frame, it is desirable to select an adhesive, which is able to exhibit performances required for a tire, considering the affinity between a material used for both the components and the adhesive. However, it is difficult to select a proper adhesive for fixing adequately a rubber-made exterior component to a tire frame using a resin material, and there still remains room for improvement in fixation of both the components.

Especially, in a case in which an exterior component is layered on a tire frame via an adhesive, and thereafter a rubber contained in the exterior component is vulcanized, an ingredient contained in the adhesive may be conceivably degraded by heat during vulcanization to generate a gas. Further, when an adhesive prone to generate a gas is used, it is conceivable that a void may be generated in the adhesion layer (for example, inside the adhesion layer itself, or at an interface between the adhesion layer and the exterior component) due to the gas generation.

Under such circumstances, the object of the current embodiment is to provide a tire with less void in an adhesion layer, and a method of producing the same.

Since a thermal radical generator, a decomposition product of which has a boiling point of 150°C or higher, is used as an ingredient (C') for a tire of the embodiment, a tire with less void in an adhesion layer may be obtained. Although the reason for the above is not very clear, it is presumed as follows.

With a thermal radical generator that is a peroxide, a peroxy group is dissociated by heat to generate a radical. The generated radical acts on a thiol group of an ingredient (A) to generate a thiyl radical, and is then stabilized as a decomposition product of the thermal radical generator. However, for example, when a thermal radical generator, a decomposition product of which has a boiling point lower than a vulcanize temperature, is used, it is conceivable that a gas may be generated during vulcanization inside a composition layer itself, or at an interface between the composition layer and a rubber for an exterior component, and as the result conceivably a void may appear in the adhesion layer of the obtained tire (especially, at an interface between the adhesion layer and the exterior component).

In contrast, since a thermal radical generator, a decomposition product of which has a boiling point of 150°C or higher, is used as an ingredient (C') in the case of a tire of the embodiment, it is presumed that a gas is not apt to be generated during vulcanization, and therefore there appears less void in the adhesion layer.

Since a tire of the embodiment uses a composition containing an ingredient (A), an ingredient (B'), and an ingredient (C') as described above, an exterior component is not apt to detach from a tire frame. Although the reason for the above is not very clear, it is presumed as follows.

In at least one of a process for forming a composition layer, or a process for yielding an adhesion layer from the composition layer, a reaction between part of thiol groups of an ingredient (A) contained in a composition and reactive functional groups of an ingredient (B') occurs to polymerize the ingredient (A) and the ingredient (B'). Owing to the copolymerization between the ingredient (A) and the ingredient (B'), the film strength of the adhesion layer is conceivably enhanced.

Meanwhile, a radical is generated through activation of an ingredient (C') by heating a composition layer, and the generated radical acts on a thiol group in an ingredient (A) having not reacted with a reactive functional group in an ingredient (B') to generate a thiyl radical. The thiyl radical causes a thiol-ene reaction with a carbon-carbon double bond included in a rubber contacting the composition layer to establish a chemical bond at an interface between the composition layer and the rubber, so that the composition layer comes to an adhesion layer. It is conceivable that the interfacial adhesive strength between the adhesion layer and an exterior component becomes high owing to the chemical bond at the interface.

When a part of thiol groups out of the thiol groups contained in an ingredient (A) copolymerize with an ingredient (B'), and another part of the same causes a thiol-ene reaction with a rubber, both film strength and interfacial adhesive strength are favorably developed, and conceivably detachment of an exterior component form a tire frame is suppressed. Hereinafter, the overall adhesion strength including a film strength and an interfacial adhesive strength may be occasionally referred to as "adhesive strength".

For a tire of the embodiment the same form as the aforementioned tire of the first embodiment, or tire of the second embodiment may be applied, except that the adhesion layer described below is used as an adhesion layer.

Specifically, for a tire frame, an exterior component, and other layers of a tire of the embodiment, the same compositions and constitutions as a tire frame, an exterior component, and other layers of a tire of the first embodiment may be applied.

Further, also with respect to the constitution of a tire of the embodiment, the same constitution as the first embodiment or the second embodiment may be applied. In other words, with respect to a tire of the current embodiment, a form in which a tread as an exterior component is provided on the outer circumferential surface of a crown area of a tire frame via an adhesion layer may be applied, and a form in which a side component as an exterior component is provided on the outer peripheral surface of a side area of a tire frame via an adhesion layer may be applied.

Further, with respect to a method of producing a tire of the embodiment, the same method of producing a tire as in the first embodiment may be applied, except that the composition described below is used as a composition.

Methods for producing an adhesion layer and a tire according to the embodiment will be described below in detail.

### << Adhesion Layer>>

An adhesion layer in a tire of the embodiment is obtained by heating a composition layer formed using a composition containing an ingredient (A), an ingredient (B'), and an ingredient (C') as described above. Specifically, an adhesion layer is obtained by heating a composition layer and an unvulcanized rubber contained in an exterior component in a state where the two contact each other to activate the ingredient (C'). With respect to the thus obtained adhesion layer, an adhesion layer and an exterior component are chemically bonded as described above, through which a favorable adhesive strength at an interface of the adhesion layer and the exterior component is conceivably obtained.

A composition layer includes, for example, a layer of a coated film obtained by painting a composition, and also a layer of an adhesive composition film prepared by forming a film of a composition through polymerization of the ingredient (A) and the ingredient (B') in the composition for forming a coated film.

In this regard, to "form a film" means that a composition is shaped into a film, and an ingredient (A) and an ingredient (B') in a composition are polymerized to harden the film, and to impart a favorable shape retention property thereto. The "layer of a coated film" means a state before the composition is formed into a film, and there exist an ingredient (A) and an ingredient (B') unpolymerized.

In other words, when a composition layer is a layer of a coated film, by heating in a state, where the coated film and an unvulcanized rubber contained in an exterior component are in contact, a thiol-ene reaction occurs at an interface, and an ingredient (A) and an ingredient (B') are polymerized, so that the coated film becomes an adhesion layer. When a composition layer is a layer of an adhesive composition film, an ingredient (A) and an ingredient (B') are polymerized in the course of formation of an adhesive composition film. Then, by heating in a state, where the adhesive composition film and an unvulcanized rubber contained in an exterior component are in contact, the unvulcanized rubber is vulcanized, and a thiol-ene reaction occurs at an interface so that the adhesive composition film is converted to an adhesion layer.

The ratio (S/N) of the number (S) of sulfur atoms contained in an adhesion layer to the number (N) of nitrogen atoms contained in an adhesion layer, and the thickness of an adhesion layer are the same as the first embodiment.

The composition will be described below in detail.

### <Composition>

The composition contains at least an ingredient (A), an ingredient (B'), and an ingredient (C'), and may contain if necessary another ingredient.

### -Compound Having Functional Group Reactive with Thiol Group (B')-

A 'compound having a functional group reactive with a thiol group (B')' means herein a compound having at least one functional group reactive with a thiol group (reactive functional group) in the molecule.

Examples of a reactive functional group may include an isocyanate group, an acryloyl group, a methacryloyl group, an epoxy group, an allyl group, a vinyl group, an allyloxy group, a vinyloxy group, and a group having a norbornene skeleton.

Examples of a group having a norbornene skeleton may include an unsubstituted norbornenyl group.

The ingredient (B') may be a compound having only one kind of reactive functional group in a molecule, or may be a compound having two or more kinds thereof.

There is no particular restriction on the number of reactive functional group in a molecule with respect to an ingredient (B').

For example, when an ingredient (B') contains an acryloyl group as a reactive functional group, the number of reactive functional group in a molecule may be, although it may be different between the case of a low molecular weight compound, and the case of a high molecular weight compound (for example, oligomer, or polymer), from 1 to 70 from the viewpoint of enhancement of adhesive strength, preferably from 1 to 20, more preferably from 2 to 10, and further preferably from 3 to 7.

Meanwhile, when an ingredient (B') contains only a reactive functional group other than an acryloyl group (namely, an acryloyl group is not contained), the number of terminal double bond in a molecule may be, although it may be different between in the case of a low molecular weight compound and in the case of a high molecular weight compound (for example, oligomer, or polymer), from 2 to 70 from the viewpoint of enhancement of adhesive strength, preferably from 2 to 10, and more preferably from 3 to 7.

That is, since a compound having an acryloyl group is highly reactive and apt to polymerize by application of energy, a compound having only one acryloyl group in a molecule may be also used favorably as an ingredient (B'). On the other hand, since a compound not having an acryloyl group is less reactive compared to a compound having an acryloyl group, a compound with the number of reactive functional group in a molecule of two or more may be used favorably as an ingredient (B').

When an ingredient (B') is a high molecular weight compound, the number average molecular weight of an ingredient (B') is for example 50000 or less from the viewpoint of enhancement of adhesive strength, preferably 40000 or less, and more preferably 35000 or less. Although there is no particular restriction on the lower limit of the number average molecular weight of an ingredient (B'), the number average molecular weight of an ingredient (B') may be for example 2000 or more.

Examples of an ingredient (B') may include a polyisocyanate having two or more isocyanate groups, a monoacrylate having an acryloyl group, a poly acrylate having two or more acryloyl groups, a polymethacrylate having two or more methacryloyl groups, an epoxy compound having two or more epoxy groups, an allyl compound having two or more allyl groups, a vinyl compound having two or more vinyl groups, an allyl ether compound or an allyl ester compound having two or more allyloxy groups, a vinyl ether compound or a vinyl ester compound having two or more vinyloxy groups, and a norbornene compound having two or more norbornenyl groups.

As an ingredient (B') only one kind of compound having a functional group reactive with a thiol group may be used, or a combination of two or more kinds of compounds having a functional group reactive with a thiol group may be used.

As an ingredient (B'), a compound having a cyclic structure besides a reactive functional group in the molecule is preferable. When a compound having a cyclic structure is used as an ingredient (B'), an adhesion layer with high heat resistance can be obtained.

There is no particular restriction on a cyclic structure, insofar as a ring is constituted, and examples of a cyclic structure may include an aliphatic ring structure, an aromatic ring structure, and a heterocyclic structure.

As an aliphatic ring structure, ring structures constituted with carbon except an aromatic ring structure may be used, and an aliphatic ring structure may be a saturated aliphatic ring structure, or an unsaturated aliphatic ring structure.

Specific examples of an aliphatic ring structure may include a monocyclic aliphatic ring structure, and more specifically a cycloalkane structure such as cyclohexane, and a cycloalkene structure such as cyclohexene. The number of carbon constituting a monocyclic aliphatic ring structure is, for example, in a range of from 3 to 20, preferably a range of from 4 to 12, more preferably a range of from 5 to 8, and most preferably 6.

An aliphatic ring structure is not limited to monocyclic one, and may be also a polycyclic aliphatic ring structure. Examples of a polycyclic aliphatic ring structure may include a polycyclic cycloalkane structure such as decalin, and a polycyclic cycloalkene structure such as norbornene. The number of carbon constituting each ring in a polycyclic aliphatic ring structure is, for example, in a range of from 3 to 20, preferably a range of from 4 to 12, and more preferably a range of from 5 to 8, and a polycyclic aliphatic ring structure having a six-membered ring is further preferable.

Examples of an aromatic ring structure may include an unsaturated cyclic structure with annularly aligned carbons having π electrons. Specific examples of an aromatic ring structure may include a monocyclic aromatic ring structure, such as benzene, and [4n+2] annulene (provided that n is from 1 to 4), as well as a polycyclic aromatic ring structure, such as naphthalene, azulene, indene, fluorene, and anthracene. Among the above, a monocyclic or polycyclic aromatic ring structure having a benzene ring (namely, a C6 aromatic ring) is preferable as an aromatic ring structure, and a monocyclic benzene ring structure is most preferable.

A heterocyclic structure is a heterocyclic structure constituted together with one or more hetero atoms, and may be monocyclic or polycyclic, and may be aliphatic or aromatic. A hetero atom means an atom constituting a ring structure other than carbon. Specific examples of a hetero atom may include a nitrogen atom, an oxygen atom, and a sulfur atom.

Specific examples of a heterocyclic structure may include a structure obtained through substitution of one or more (specifically, for example, from 1 to 3) carbon atoms in the aliphatic ring structure or the aromatic ring structure with hetero atoms. The number of atoms constituting a monocyclic heterocyclic structure may be, for example, from 3 to 10, preferably a range of from 5 to 8, and most preferably 6. Meanwhile, the number of atoms constituting each ring in a polycyclic heterocyclic structure may be, for example, from 3 to 10, and preferably a range of from 5 to 8. As a polycyclic heterocyclic structure, one having a six-membered ring is further preferable.

The above aliphatic ring structure, aromatic ring structure, and heterocyclic structure may have a substituent further. Examples of such a substituent may include a (meth)acryloyl group as well as an oxygen atom (=O), a hydroxy group, an alkyl group, an alkoxy group, and an amino group

The substituent may be directly introduced to an atom constituting a cyclic structure, or introduced via a linking group. When there are two or more cyclic structures in a molecule of an ingredient (B'), an atom constituting a cyclic structure and an atom constituting the other cyclic structure may be bonded by a single bond, or boded via a linking group. Examples of the linking group may include an alkylene group, a carbonyl group, an ether bond, an ester bond, a sulfide bond, an amide bond, a urethane bond, and a urea bond.

An ingredient (B') may have only one kind of the cyclic structures in a molecule, or have two or more kinds thereof. Further, an ingredient (B') may have only a monocyclic structure in a molecule, or only a polycyclic structure, or may have both a monocyclic structure and a polycyclic structure.

The number of rings included in a molecule of an ingredient (B') may be, although it may be different between a case of a low molecular weight compound and a case of a high molecular weight compound, for example, from 1 to 100, or from 1 to 50, preferably from 1 to 20, and more preferably from 2 to 10.

When a polycyclic structure is included, for the "number of rings" all of the rings are counted. More specifically, in a case in which only one anthracene structure is present in a molecule as a cyclic structure, the "number of rings" is three.

As an ingredient (B') a compound having a nitrogen atom is preferable from the viewpoint of high film strength of an adhesion layer.

Examples of a compound having a nitrogen atom may include a compound having as a cyclic structure a heterocyclic structure including a nitrogen atom as a hetero atom, and a compound to which a substituent or a linking group including a nitrogen atom in atoms constituting a cyclic structure is bonded. In this case, a nitrogen atom included in the substituent or linking group may be directly bonded to an atom constituting the cyclic structure.

Specific examples of a compound having a nitrogen atom may include a compound having at least either of a urethane skeleton or an isocyanurate ring. As a compound having a nitrogen atom, a compound having both an isocyanurate ring, and a urethane bond is preferable from the viewpoint of favorable securement of both adhesive strength and heat resistance of an adhesion layer.

Examples of a compound having a urethane skeleton may include a urethane compound obtained by a reaction between an organic isocyanate compound and a hydroxy group-containing compound having one or more reactive functional group and a hydroxy group in the molecule. Further, a compound having a urethane skeleton may be a compound obtained by a reaction of an organic isocyanate compound with a hydroxy group-containing compound as well as, if necessary, at least one kind of diol selected out of an alkanediol, a polyether diol, a polybutadiene diol, a polyester diol, a polycarbonate diol, or an amide diol.

As a method of obtaining a urethane compound through a reaction between an organic isocyanate compound and a hydroxy-containing compound, a method known in the art may be applied.

Examples of an organic isocyanate compound may include an aromatic diisocyanate, such as toluene diisocyanate, diphenylmethane diisocyanate, diphenyldimethylmethane diisocyanate, dibenzyl diisocyanate, naphthylene diisocyanate, phenylene diisocyanate, xylene diisocyanate, and tetramethylxylylene diisocyanate; an aliphatic diisocyanate, such as tetramethylene diisocyanate, hexamethylene diisocyanate, lysine diisocyanate, 2-methylpentane-1,5-diisocyanate, 3-methylpentane-1,5-diisocyanate, and 2,2,4-trimethylhexamethylene-1,6-diisocyanate; and an alicyclic diisocyanate, such as isophorone diisocyanate, cyclohexane diisocyanate, hydrogenated xylylene diisocyanate, hydrogenated diphenylmethane diisocyanate, and hydrogenated trimethylxylylene diisocyanate. Further, a modified derivative thereof, such as an adduct modified derivative, a carbodiimide modified derivative, an allophanate-modified derivative, a biuret modified derivative, a uretdione modified derivative, a uretonimine modified derivative, and an isocyanurate modified derivative, may be included.

In a case in which a urethane compound is, for example, a methacrylate, examples of a hydroxy group-containing compound may include a hydroxy group-containing methacrylate, such as 2-hydroxyethyl methacrylate, 2-hydroxypropyl methacrylate, 4-hydroxybutyl methacrylate, glycerol dimethacrylate, trimethylolpropane dimethacrylate, pentaerythritol trimethacrylate, and dipentaerythritol pentamethacrylate.

Also in a case in which a urethane compound is a compound other than methacrylate, a compound corresponding to the hydroxy group-containing methacrylate (namely, a compound replacing a methacryloyl group in the hydroxy group-containing methacrylate with one of corresponding reactive functional groups) may be used as a hydroxy group-containing compound.

Examples of a compound having an isocyanurate ring may include one obtained by reacting a compound having an isocyanurate ring and a hydroxy group with a compound having a reactive functional group to react with a hydroxy group (for example, methacrylic acid).

Examples of a compound having an isocyanurate ring and a hydroxy group may include tris(2-hydroxyethyl)isocyanurate, and tris(hydroxymethyl)isocyanurate.

Specific examples of a compound having at least either of a urethane skeleton or an isocyanurate ring include the compounds expressed by the following structural formulas from (B-1) to (B-3) and the compounds expressed by the following Formulas from (B-4) to (B-6) without limitation thereto.

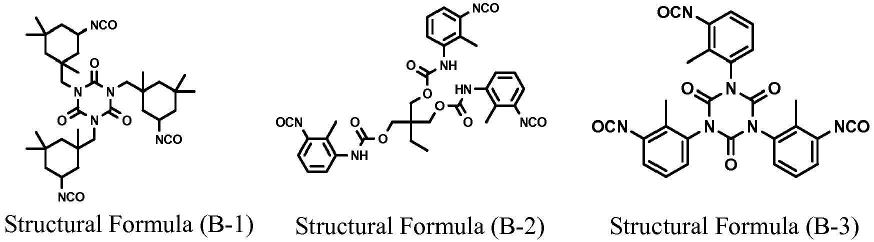

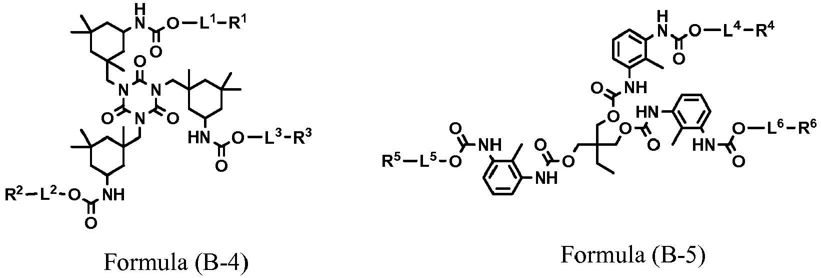

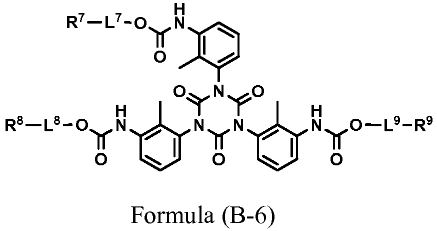

In Formulas from (B-4) to (B-6), from R¹ to R⁹ each independently represent an acryloyl group, a methacryloyl group, an epoxy group, a vinyl group, or a norbornenyl group, and from L¹ to L⁹ each independently represent a C1 to C4 alkylene group.

In compounds expressed by Formulas from (B-4) to (B-6), it is preferable that from R¹ to R³, from R⁴ to R⁶, and from R⁷ to R⁹ are respectively the same group (namely, there is only one kind of reactive functional group in a molecule) from the viewpoint of the film strength of an adhesion layer.

In Formulas from (B-4) to (B-6), from L¹ to L⁹ preferably have a low carbon number from the viewpoint of heat resistance of a layered body, and are more preferably a C1 to C2 alkylene group.

In this regard, an ingredient (B') is not limited to the above compounds, and it may be another compound insofar as it is a compound having a reactive functional group.

Examples of other compounds having a reactive functional group are listed below without limitation thereto.

### (Compound Having Isocyanate group)

Examples of a polyisocyanate having two or more isocyanate groups may include the aforementioned organic isocyanate compounds.

### (Compound Having Methacryloyl Group)

Specific examples of a dimethacrylate among polymethacrylates having two or more methacryloyl groups may include a dimethacrylate of a straight chain alkanediol such as 1,6-hexanediol dimethacrylate; a dimethacrylate of an alkanediol having a branched structure such as neopentylglycol dimethacrylate; a dimethacrylate of an alkanediol having a ring structure such as dicyclopentanediol dimethacrylate; and a dimethacrylate of a polyetherdiol such as poly(ethylene glycol) dimethacrylate.

Further, specific examples of a dimethacrylate may also include an alkylene oxide adduct of a dimethacrylate of a straight chain alkanediol, an alkylene oxide adduct of a dimethacrylate of an alkanediol having a branched structure, an alkylene oxide adduct of a dimethacrylate of an alkanediol having a ring structure, and an alkylene oxide adduct of a dimethacrylate of a polyetherdiol.

The carbon number of an alkanediol of the dimethacrylate of a straight chain alkanediol, the dimethacrylate of an alkanediol having a branched structure, and the dimethacrylate of an alkanediol having a ring structure may be, for example, from 2 to 50.

The recurring unit number of a polyether in the dioldimethacrylate of polyether may be for example from 2 to 15.

Specific examples of a tri-functional or higher multifunctional methacrylate may include a methacrylic acid-modified product of a polyhydric alcohol, such as trimethylolpropane, pentaerythritol, and glycerol (for example, an ester between a polyhydric alcohol and methacrylic acid); and an alkylene oxide-modified product of the same (for example, an alkylene oxide adduct of the ester). The carbon number of a polyhydric alcohol may be, for example, from 6 to 100.

Further specific examples of a tri-functional or higher multifunctional methacrylate may include trimethylolpropane trimethacrylate, dipentaerythritol pentamethacrylate, dipentaerythritol hexamethacrylate, pentaerythritol trimethacrylate, and pentaerythritol tetramethacrylate.

Further, as a compound having a methacryloyl group, an epoxy polymethacrylate, a polyester polymethacrylate, and a methacryloyl group-containing methacrylic acid ester copolymer may be also used.

Specific examples of an epoxy polymethacrylate may include a bisphenol type epoxy dimethacrylate as a reaction product of a bisphenol type epoxy resin obtained through a condensation reaction between bisphenol A and epichlorohydrin, with methacrylic acid.

Specific examples of a polyester polymethacrylate may include a compound obtained by a reaction of a polybasic acid such as phthalic acid, a polyhydric alcohol such as ethylene glycol, and methacrylic acid.

### (Compound Having Acryloyl Group)

Specific examples of a monoacrylate may include an acrylate of a straight chain alkanol, such as hexyl acrylate and stearyl acrylate; an acrylate of an alkanol having a branched structure, such as 2-ethylhexyl acrylate; an acrylate of an aliphatic alkanol having a ring structure, such as cyclohexyl acrylate, and isobornyl acrylate; and an acrylate of an aromatic alcohol, such as benzyl acrylate. Additionally, an acrylate of a halogenated alcohol, such as 2-chloroethyl acrylate; and an acrylate of an alkoxy alcohol, such as 3-methoxybutyl acrylate may be also included.

Specific examples of a polyacrylate having two or more acryloyl groups may include a compound for which a methacryloyl group of the dimethacrylate or the multifunctional methacrylate is replaced with an acryloyl group.

### (Compound Having Epoxy Group)

Examples of an epoxy compound having two or more epoxy groups may include an aromatic epoxide, an aliphatic epoxide, an alicyclic epoxide, and a modified derivative thereof.

Examples of an aromatic epoxide may include a bisphenol A epoxy compound, a bisphenol F epoxy compound, a bisphenol S epoxy compound, and a phenol novolac epoxy compound, such as a compound expressed by the following structural formula (B-7), or structural formula (B-8); and a cresol novolac epoxy compound, a polyphenol epoxy compound, a biphenyl epoxy compound, a naphthalene ring-containing epoxy compound, and a fluorene epoxy compound, such as a compound expressed by the following structural formula (B-9).

Examples of an aliphatic epoxide may include a poly(alkylene glycol) diglycidyl ether such as trimethylolpropane triglycidyl ether, and glycerol polyglycidyl ether.

Examples of an alicyclic epoxide may include cyclohexanedimethanol diglycidyl ether.

Examples of a modified derivative of an aromatic epoxide, an aliphatic epoxide, and an alicyclic epoxide may include a hydrogenated bisphenol A epoxy compound, a hydrogenated bisphenol F epoxy compound, a hydrogenated biphenyl epoxy compound, and a brominated bisphenol epoxy compound, such as a compound expressed by the following structural formula (B-10).

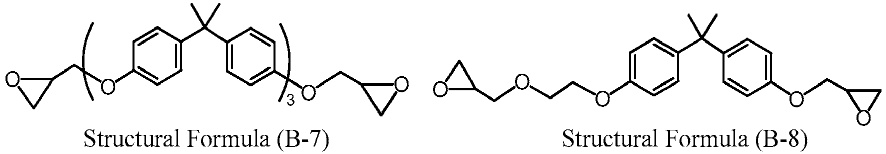

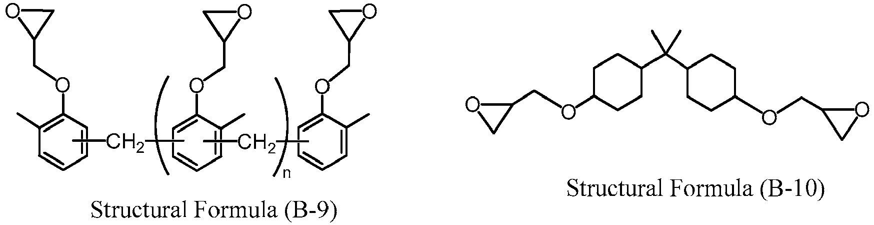

### (Compound Having Allyloxy Group)

Examples of an allyl ether compound having two or more allyloxy groups may include a compound, in which two or more alcoholic hydroxy groups of a dialcohol or a polyhydric alcohol are substituted with allyloxy groups, such as trimethylolpropane diallyl ether, trimethylolpropane triallyl ether, pentaerythritol triallyl ether, glycerol 1,3-diallyl ether, bisphenol A diallyl ether, and a urethane allyl ether oligomer.

Examples of an allyl ester compound having two or more allyloxy groups may include diallyl phthalate.

### (Compound Having Allyl Group, Compound Having Vinyloxy Group, and Compound Having Vinyl Group)

Specific examples of an allyl compound having two or more allyl groups, a vinyl ether compound having two or more vinyloxy groups, and a vinyl compound having two or more vinyl groups may include a compound, in which an allyloxy group of the allyl ether compound is substituted respectively with an allyl group, a vinyloxy group, and a vinyl group.

Examples of a vinyl ester compound having two or more vinyloxy groups may include a compound in which an allyloxy group of the allyl ester compound is substituted with a vinyloxy group.

### (Norbornene Compound Having Norbornenyl Group)

Specific examples of a norbornene compound having two or more norbornenyl groups may include a compound expressed by the following structural formula (B-11) (PEG-tetranorbornene), a compound expressed by the following structural formula (B-12) (tri-(norborn-2-ene-5-carboxylate), TMPTN), a compound expressed by the following structural formula (B-13) (pentaerythritol tetra-(norborn-2-ene-5-carboxylate), PTN4), a compound expressed by the following structural formula (B-14) (pentaerythritol tri-(norborn-2-ene-5-carboxylate), PTN3), and a compound expressed by the following structural formula (B-15) (di(trimethylolpropane) tetra-(norborn-2-ene-5-carboxylate), DTTN).

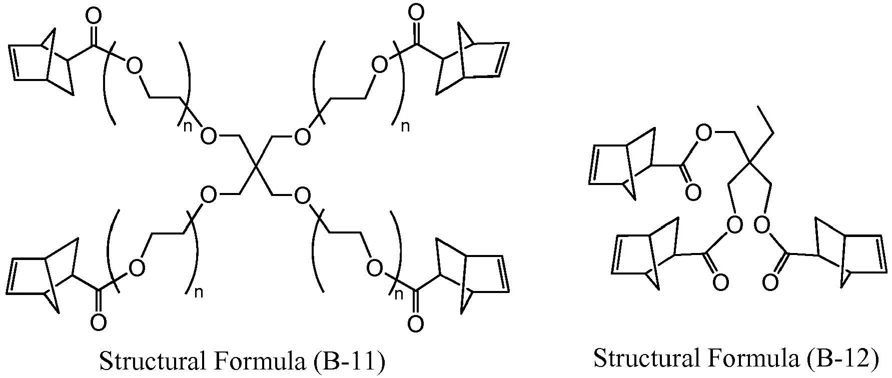

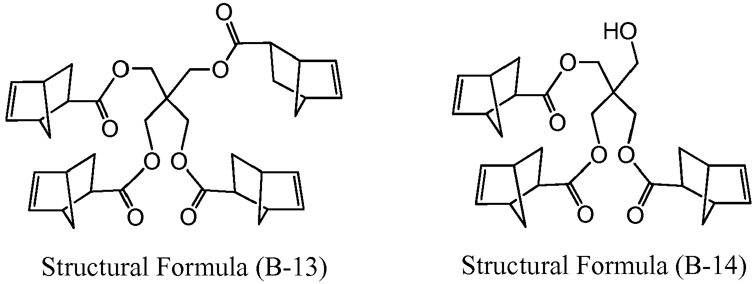

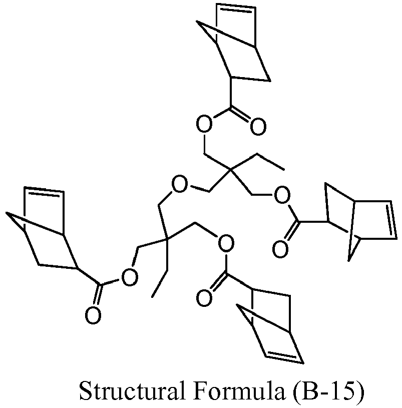

### -Thermal Radical Generator (C')-

According to the embodiment a thermal radical generator (C') that is a peroxide, a decomposition product of which has a boiling point of 150°C or higher is used as an ingredient (C').

In this regard, a "radical generator" means a compound that generates a radical by application of energy such as heat and light, of which a "thermal radical generator" is a compound that is activated by heating to generate a radical. Since a thermal radical generator is used according to the invention as described above, a thermal radical generator (C') is activated by heating to generate a radical, and the generated radical acts on a thiol group in a polythiol compound (A) to generate a thiyl radical. Namely, the ingredient (C') is an ingredient that contributes to formation of a chemical bond at an interface with a rubber of an exterior component.

The "boiling point is 150°C or higher" means boiling does not occur at one atm at a temperature lower than 150°C.

The boiling point of a decomposition product of a thermal radical generator is 150°C or higher, preferably 160°C or higher, and more preferably 180°C or higher.

A decomposition product of a thermal radical generator is, as described above, a compound formed as the result of thermal decomposition of a peroxide constituting a thermal radical generator, and a kind of formed compound depends on the chemical structure of the peroxide.

When a thermal radical generator is a compound expressed by the following Formula (C-1), examples of decomposition products of a thermal radical generator include a compound expressed by the following Formula (C-1A), and a compound expressed by the following Formula (C-1B).

Formula (C-1): R^{1A}-O-O-R^{1B}

Formula (C-1A): R^{1A}-OH

Formula (C-1B): R^{1B}-OH

In this regard, R^{1A} and R^{1B} in Formula (C-1), Formula (C-1A), and Formula (C-1B) each independently represent a monovalent organic group.

Meanwhile, in a case in which a thermal radical generator is a compound expressed by the following Formula (C-2), decarboxylation may occasionally occur by heat. Examples of a decomposition product of a compound, which is expressed by the following Formula (C-2) and causes decarboxylation, may include a compound expressed by the following Formula (C-2A), carbon dioxide, and a compound expressed by the following Formula (C-2B)

Formula (C-2): R^{2A}-O-O-C(=O)-R^{2B}

Formula (C-2A): R^{2A}-OH

Formula (C-2B): R^{2B}-H

In this regard, R^{2A} and R^{2B} in Formula (C-2), Formula (C-2A), and Formula (C-2B) each independently represent a monovalent organic group.

In other words, examples of a thermal radical generator (C') may include a compound which is expressed by Formula (C-1), and for which the boiling point of a compound expressed by Formula (C-1A) and the boiling point of a compound expressed by Formula (C-1B) are both 150°C or higher.

On the other hand, a compound, which is expressed by Formula (C-2) and causes decarboxylation, generates carbon dioxide by decomposition, and therefore is a "thermal radical generator a decomposition product of which has a boiling point below 150°C". Therefore, a thermal radical generator (C') preferably does not have a carbonyl peroxy group (namely, not a compound expressed by Formula (C-2B)).

Examples of R^{1A} and R^{1B} in a compound which is expressed by Formula (C-1), and a decomposition product of which has a boiling point of 150°C or higher, may include independently a C6 or higher straight-chain alkyl group, a C7 or higher branched alkyl group, a C6 or higher alkyl group having an aliphatic ring, or a C6 or higher aralkyl group; and among them a C9 to C12 aralkyl group is preferable.

Examples of a preferable compound as a thermal radical generator (C') among compounds expressed by Formula (C-1) may include a compound expressed by the following Formula (C-3). In the following Formula (C-3), p and q each independently represent an integer from 0 to 3.

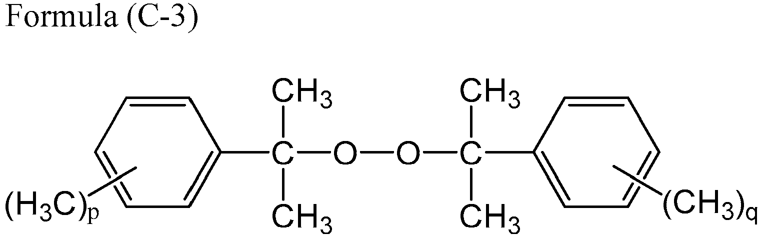

Specific examples of a thermal radical generator (C'), a decomposition product of which has a boiling point of 150°C or higher, may include a thermal radical generator that is an organic peroxide, such as dicumyl peroxide, which is a compound expressed by Formula (C-3) wherein p and q are 0, di-*t*-hexyl peroxide, di-*t*-octyl peroxide, cumyl-*t*-hexyl peroxide, cumyl-*t*-octyl peroxide, 1,3-bis(cumyl peroxyisopropyl)benzene, 1,3-bis(*t*-hexyl peroxyisopropyl)benzene, and 1,3-bis(*t*-octyl peroxyisopropyl)benzene, without limitation thereto. The thermal radical generators that is an organic peroxide may be used singly, or in combination of two or more kinds thereof.

The one-minute half-life temperature of a thermal radical generator (C') is preferably 140°C or higher, more preferably from 150°C to 200°C, and further preferably from 160°C to 190°C.

A composition to be used according to the invention may include in addition to an ingredient (C') another radical generator (for example, a thermal radical generator, a decomposition product of which has a boiling point below 150°C, and a photo-radical generator) to the extent that the effect of the invention is not impaired.

Examples of a composition containing another radical generator may include a form in which a reactive functional group in an ingredient (B') is a group having a carbon-carbon double bond, and a photo-radical generator is used as a radical generator for promoting film formation of a composition. In this case, examples of a reactive functional group having a carbon-carbon double bond may include an acryloyl group, a methacryloyl group, an allyl group, a vinyl group, an allyloxy group, a vinyloxy group, and a norbornenyl group.

When a composition contains another radical generator, the content of such other radical generator with respect to the total solids of the composition (ingredients other than solvent) is preferably 5% by mass or less, and more preferably 1% by mass or less.

### -Optional Ingredient-

A composition used according to the invention may further contain an optional ingredient. Examples of an optional ingredient may include a catalyst, a surface conditioner, a solvent, a binder, a filler, a pigment dispersing agent, a electroconductivity imparting agent, a UV absorber, an antioxidant, an anti-drying agent, a penetrating agent, a pH adjuster, a sequestering agent, an antibacterial and antifungal agent, a surfactant, a plasticizer, a wax, and a leveling agent.

### (Catalyst (D'))

A composition used according to the embodiment may use a catalyst for promoting a reaction between an ingredient (A) and an ingredient (B') (hereinafter also referred to as "catalyst (D')").

For example, when an ingredient (B') contains an isocyanate group as a reactive functional group, an optional thiourethanization catalyst may be used as a catalyst (D').

Examples of the thiourethanization catalyst may include an organic tin compound, such as dibutyltin dilaurate, dibutyltin diacetate, dibutyltin thiocarboxylate, dibutyltin dimaleate, dioctyltin thiocarboxylate, tin octenoate, and monobutyltin oxide; an inorganic tin compound, such as stannous chloride; an organic lead compound, such as lead octenoate; an amine, such as bis(2-dimethylaminoethyl)ether, *N,N,N',N'*-tetramethylhexamethylenediamine, triethylenediamine (TEDA), benzyldimethylamine, 2,2'-dimorpholinoethyl ether, and *N*-methylmorpholine; an organic sulfonic acid, such as *p*-toluenesulfonic acid, methanesulfonic acid, and fluorosulfuric acid; an inorganic acid, such as sulfuric acid, phosphoric acid, and perchloric acid; a base, such as sodium alcoholate, lithium hydroxide, aluminum alcoholate, and sodium hydroxide; a titanium compound, such as tetrabutyl titanate, tetraethyl titanate, and tetraisopropyl titanate; a bismuth compound; and a quaternary ammonium salt.

Among them, the amines are preferable as a thiourethanization catalyst, and triethylenediamine (TEDA) is more preferable. The catalysts may be used singly or in combination of two or more kinds thereof.

When an ingredient (B') contains at least one of an acryloyl group or a methacryloyl group as a reactive functional group, as a catalyst (D') an optional Michael addition catalyst may be used.

Examples of the Michael addition catalyst may include an amine catalyst, a base catalyst, and an organometallic catalyst.

Examples of an amine catalyst may include proline, triazabicyclodecene (TBD), diazabicycloundecene (DBU), hexahydromethyl pyrimidopyridine (MTBD), diazabicyclononane (DBN), tetramethylguanidine (TMG), and triethylenediamine (TEDA).

Examples of a base catalyst may include sodium methoxide, sodium ethoxide, potassium *tertiary*-butoxide, potassium hydroxide, sodium hydroxide, sodium metal, lithium diisopropylamide (LDA), and butyllithium.

Examples of an organometallic catalyst may include a ruthenium catalyst, such as cyclooctadiene cyclooctatriene ruthenium, and ruthenium hydride; an iron catalyst, such as iron trichloride and iron acetylacetonate; a nickel catalyst, such as nickel acetylacetonate, nickel acetate, and nickel salicylaldehyde; a copper catalyst; a palladium catalyst; a scandium catalyst; a lanthanum catalyst; a ytterbium catalyst; and a tin catalyst.

The catalysts may be used singly or in combination of two or more kinds thereof.

Among the above an amine catalyst is preferable as a Michael addition catalyst, and an amine catalyst having two or more amino groups in a molecule is further preferable, especially preferably an amine catalyst having a ring structure, and among others triethylenediamine is most preferable.

When an ingredient (B') has an epoxy group as a reactive functional group, as a catalyst (D') an optional anionic polymerization catalyst may be used.

Examples of the anionic polymerization catalyst may include an amine catalyst.

Examples of an amine catalyst include a diamine, and include specifically bis(2-dimethylaminoethyl)ether, *N,N,N'*,*N'*-tetramethylhexamethylenediamine, triethylenediamine (TEDA), benzyldimethylamine, 2,2'-dimorpholinoethyl ether, and *N*-methylmorpholine. Among the above, triethylenediamine (TEDA) is preferable. The catalysts may be used singly or in combination of two or more kinds thereof.

A polythiol compound (A), as well as a surface conditioner (E) and a solvent, which are optional ingredients, are the same as the first embodiment.

### -Content of Each Ingredient-

The content of each ingredient may be decided appropriately to the extent that the effect of the invention be not impaired.

The ratio (FG/SH) of the total mole number (FG) of reactive functional groups contained in the compound (B') to the total mole number (SH) of thiol groups contained in the polythiol compound (A) is preferably 0.22 or less.

Throughout the current description, "SH" represents the total mole number of thiol groups contained in a polythiol compound (A), and "FG" represents the total mole number of reactive functional groups contained in the compound (B'). Further, the "ratio (FG/SH)" represents a proportion of the total mole number (FG) of reactive functional groups contained in the compound (B') with respect to the total mole number (SH) of thiol groups contained in the polythiol compound (A) (namely, ratio (FG/SH) = FG/SH).

When the ratio (FG/SH) is 0.22 or less, the ratio of thiol groups in an ingredient (A) to reactive functional groups in an ingredient (B') is high compared to a case where the ratio exceeds 0.22, and a larger amount of thiol groups remain unreacted with a reactive functional group. As the result, a thiol-ene reaction between a thiol group and a carbon-carbon double bond in a rubber occurs adequately, and a high interfacial adhesive strength at an interface between an adhesion layer and a rubber in an exterior component is prone to be obtained.

The ratio (FG/SH) of the total mole number (FG) of reactive functional groups contained in an compound (B') to the total mole number (SH) of thiol groups contained in an polythiol compound (A) is preferably 0.075 or more.

When the ratio (FG/SH) is 0.075 or more, the film strength of an adhesion layer may become higher compared to a case where the ratio is below 0.075.

The ratio (FG/SH) is preferably from 0.075 to 0.22 from the viewpoint of acquisition of favorable adhesive strength, and more preferably from 0.1 to 0.2.

In this regard, the "total mole number (SH) of thiol groups contained in a polythiol compound (A)" may be calculated by multiplying the mole number of a polythiol compound (A) by the number of thiol groups present in a molecule of the polythiol compound (A). In other words, the "total mole number (SH) of thiol groups contained in a polythiol compound (A)" means the total amount of thiol groups in the total amount of polythiol compounds (A) contained in the composition, and not the number of thiol groups in a molecule of a polythiol compound.

Meanwhile, the "total mole number (FG) of reactive functional groups contained in a compound (B')" may be found by dividing an addition amount by the theoretical molecular weight, and multiplying the quotient by the number of reactive functional groups present in a molecule of the compound (B'). In other words, the "total mole number (FG) of reactive functional groups contained in a compound (B')" means the total amount of reactive functional groups in the total amount of the compound (B') contained in the composition, and not the number of reactive functional groups in a molecule of a compound (B').

In a case in which all of reactive functional groups in an ingredient (B') are isocyanate groups, the total mole number of isocyanate groups present in the compound (B') may be found by a measurement by the method of JIS K 1603-1B.

In a case in which the compound (B') is an epoxy resin, the epoxy equivalent of the epoxy resin (the mass of a resin containing 1 equivalent of epoxy group) is measured by a method according to JIS K 7236:2001, and then the total mole number of epoxy groups contained in the compound (B') may be calculated by dividing the number average molecular weight of an epoxy resin by the obtained epoxy equivalent.

In a case in which the total mole number (SH) of thiol groups, or the total mole number (FG) of the reactive functional groups is determined after formation of an adhesion layer, an (SH) value, and an (FG) value may be found by the above methods, after confirming the molecular structures and the contents of an ingredient (A) and an ingredient (B') contained in the composition before conversion to an adhesion layer, for example, by conducting measurements on the adhesion layer by a measurement technique known in the art, such as a NMR measurement and an IR measurement.

The ratio (thermal radical generator (C')/thiol group) of the total mole number of a thermal radical generator (C') added in a composition to the total mole number of thiol groups contained in the polythiol compound (A) is preferably 0.025 or more. From this an adequate adhesive strength (especially interfacial adhesive strength) may be exhibited. From the same viewpoint, the ratio (thermal radical generator (C')/thiol group) is preferably 0.03 or more, further preferably 0.035 or more, and especially preferably 0.04 or more. From the viewpoint of enhancement of adhesive strength, the ratio (thermal radical generator (C')/thiol group) is preferably 0.80 or less, further preferably 0.70 or less, and especially preferably 0.60 or less.

The content of an ingredient (C') with respect to the total solids of the composition (ingredients other than solvent) is preferably from 20% by mass to 60% by mass from the viewpoint of adhesive strength, and more preferably from 30% by mass to 55% by mass. Since a thermal radical generator, a decomposition product of which has a boiling point of 150°C or higher is used as an ingredient (C') according to the invention, even when the content of the ingredient (C') is high, a void is not apt to appear in an adhesion layer.

When a photo-radical generator is used as another radical generator for forming a film of a composition, the ratio (photo-radical generator/thiol group) of the total mole number of a photo-radical generator added to the total mole number of thiol groups contained in a polythiol compound (A) is preferably 0.0001 or more from the viewpoint of high film strength of an adhesion layer, further preferably 0.0005 or more, and especially preferably 0.001 or more. Further, from the viewpoint of enhancement of adhesion layer strength, the ratio (photo-radical generator/thiol group) is preferably 0.05 or less, further preferably 0.02 or less, and especially preferably 0.01 or less.

When an ingredient (B') contains an isocyanate group as a reactive functional group, as described above, a thiourethanization catalyst may be contained as an ingredient (D') in a composition. The content of a thiourethanization catalyst in a composition is preferably from 0.00001 part by mass to 5 parts by mass with respect to 100 parts by mass of an ingredient (B') containing an isocyanate group from the viewpoint of enhancement of the film strength of an adhesion layer by promoting adequately a thiourethanization reaction between an ingredient (A) and an ingredient (B'), further preferably from 0.0001 part by mass to 0.5 part by mass, and especially preferably from 0.001 part by mass to 0.1 part by mass.

When an ingredient (B') contains at least one of an acryloyl group or a methacryloyl group as a reactive functional group, as described above, a Michael addition catalyst may be contained in a composition as an ingredient (D'). The content of a Michael addition catalyst in a composition is preferably from 0.00001 part by mass to 5 parts by mass with respect to 100 parts by mass of an ingredient (B') containing at least one of an acryloyl group or a methacryloyl group from the viewpoint of enhancement of the film strength of an adhesion layer by promoting a Michael addition reaction between an ingredient (A) and an ingredient (B'), further preferably from 0.0001 part by mass to 0.5 part by mass, and especially preferably from 0.001 part by mass to 0.1 part by mass.

When an ingredient (B') contains an epoxy group as a reactive functional group, as described above, an anionic polymerization catalyst may be contained as an ingredient (D'). The content of an anionic polymerization catalyst in a composition is preferably from 0.00001 part by mass to 5 parts by mass with respect to 100 parts by mass of an ingredient (B') containing an epoxy group from the viewpoint of enhancement of the film strength of an adhesion layer by promoting an anionic polymerization between an ingredient (A) and an ingredient (B'), further preferably from 0.0001 part by mass to 0.5 part by mass, and especially preferably from 0.001 part by mass to 0.1 part by mass.

As described above, a composition may contain another optional ingredient (for example, surface conditioner (E), and solvent) in addition to the ingredients (A), (B'), and (C'), as well as an optional ingredient of (D'). However, from the viewpoint of strong adhesion of a rubber (especially, vulcanized rubber), the total content of the ingredients (A), (B'), (C'), and (D') with respect to the total ingredients except a solvent of the composition (namely, solid ingredients) is preferably 80% by mass or more, more preferably 90% by mass or more, further preferably 95% by mass or more, and especially preferably 98% by mass or more.

From the same viewpoint, the total content of the ingredients (A), (B'), (C'), (D'), and (E) with respect to the total ingredients except a solvent of the composition is preferably 90% by mass or more, more preferably 95% by mass or more, further preferably 99% by mass or more, and especially preferably 100% by mass.

Although there is no particular restriction on the amount of a solvent included in a composition, its content with respect to the total contents is preferably 50% by mass or less from the viewpoint of reduction of work load in a drying step, *etc.* in a production process of a tire, and more preferably 30% by mass or less.

### «Method of Producing Tire»

A method of producing a tire according to the embodiment will be described below.

A method of producing a tire according to the embodiment includes a green tire forming step of forming a green tire including a tire frame, a composition layer, which is formed from a composition, and an unvulcanized exterior component, and a heating step of heating the green tire. The unvulcanized exterior component contains an unvulcanized rubber, at least part of which is in contact with the composition layer, and is placed on the tire frame through the intermediary of the composition layer.

In this regard, the green tire of the embodiment contains an unvulcanized rubber in an exterior component. Namely, by heating the green tire, the unvulcanized rubber in the exterior component is vulcanized, and a composition layer is converted to an adhesion layer thereby yielding a tire of the Invention.

### -Green Tire Forming Step-

### (Tire Case Forming Step)

Firstly, tire case halves are formed using a resin material containing a thermoplastic resin as described above. The tire case halves are preferably formed by injection molding. Next, the tire case halves are supported by a thin metal support ring face to face. Then a jointing mold, which touches the outer peripheral surface of of butting parts of the tire case halves, is installed (not illustrated). In this case, the jointing mold is configured such that the areas around the joints (butting parts) of the tire case halves 17A are pressed at a predetermined pressure. Then the areas around the joints of the tire case halves are pressed at not less than the melting point (or softening point) of a resin material constituting the tire case. When the joints of the tire case halves are heated and pressed by the jointing mold, the joints are melted to weld together the tire case halves to unite the components in one piece to complete the tire case 17. Although in the current embodiment the joints of the tire case halves are heated using a jointing mold, the invention is not limited thereto, and for example, the joints may be heated with a radio frequency heating apparatus installed separately, or the tire case halves may be jointed by softening or melting the halves in advance by hot air, infrared light, or the like, followed by pressing with a jointing mold.

### (Reinforcing Cord Component Winding Step)

Next, the reinforcing cord layer 28 may be formed on the outer circumference of the crown area 16 of the tire case 17 by winding and embedding a preheated reinforcing cord 26 from a cord feeder (not illustrated) provided with a reel with a wound up reinforcing cord 26, a cord heater, various rollers, *etc.,* on the outer peripheral surface of the crown area 16.

### (Composition Layer Forming Step)

Next, on the crown area 16 of the tire case 17 where the reinforcing cord 26 has been wound up, a composition layer is formed. According to the embodiment there is an undercoat layer 23 formed from an adhesive having adhesiveness to a resin material. Therefore, a composition layer is formed on the crown area 16 of the tire case 17, where the reinforcing cord 26 has been wound up, through the intermediary of a layer of the adhesive having adhesiveness to a resin material. "Layer of an adhesive having adhesiveness to a resin material", which is a state before the layer is converted to an undercoat layer 23 by heating, may be hereinafter occasionally referred to as "prime coat layer".

In a case in which a composition layer is a layer of a coated film, a composition layer may be yielded by painting a composition on the prime coat layer formed on the crown area 16 of the tire case 17 where the reinforcing cord 26 has been wound up.

For example, as a coating method of painting a composition, there are a spray coating method, a dip coating method, and a spin coating method, without particular limitation thereto.

Further, the thickness, shape, dimension, *etc.* of a coated film may be decided appropriately according to the intended thickness of an adhesion layer, *etc.*

In a case in which a composition layer is a layer of an adhesive composition film, a composition layer may be yielded, for example, by painting a composition on a prime coat layer to form a coated film, and then converting the coated film to a film to form an adhesive composition film.

Also, in a case in which a composition layer is a layer of an adhesive composition film, a composition layer may be yielded, for example, using a support such as a release sheet. Specifically, for example, an adhesive composition film may be formed on the support, which is then made contact to the prime coat layer formed on the crown area 16 of the tire case 17 where the reinforcing cord 26 has been wound up, and then the support is released.

Further, for example, a coated film of a composition, and a prime coat layer are formed on a support one after another, and the coated film is converted to a film as an adhesive composition film, and the layered product may be bonded such that the prime coat layer contacts the crown area 16 of the tire case 17 where the reinforcing cord 26 has been wound up, and then the support is released. Further, for example, a coated film of a composition is formed on a support, which is converted to a film and a prime coat layer is formed on the obtained adhesive composition film, and the layered product may be bonded such that the prime coat layer contacts the crown area 16 of the tire case 17 where the reinforcing cord 26 has been wound up, and then the support is released.

There is no particular restriction on the support, and examples thereof may include a sheet-formed support such as a release sheet and a seating. The thickness or the shape of the support may be decided appropriately corresponding to the shape, *etc.* of an adhesive composition film to be formed.

Examples of a material to be used for a sheet-formed support may include a paper, a resin, a paper coated with a resin, and a metal.

Examples of a material to be used for a resin-made release sheet may include a polyester resin, such as poly(ethylene terephthalate), poly(cyclohexylene terephthalate), and poly(ethylene naphthalate); a polyamide resin, such as nylon 46, modified nylon 6T, nylon MXD6, and polyphthalamide; a ketone type resin, such as poly(phenylene sulfide), and poly(thioether sulfone); and a sulfone resin, such as polysulfone, and polyethersulfone. Further, as a release sheet, a transparent resin substrate containing as a main ingredient an organic resin, such as polyethernitrile, polyalylate, polyetherimide, poly(amide imide), polycarbonate, poly(methyl methacrylate), triacetyl cellulose, polystyrene, and poly(vinyl chloride), may be used favorably.

Further, as the support, a rubber component for a tread, which yields the tread 30 by heating as described below, may be used. In this case, it is not necessary to release the support, and a green tire is complete when the respective layers are made contact with each other and bonded together.

A method of converting a coated film of a composition into a film may be selected appropriately corresponding to the formulation and characteristics of a composition. For example, when a composition containing a thiourethanization catalyst is used as the composition, a coated film forms a film to yield an adhesive composition film by leaving a coated film standing at room temperature for a predetermined time. The film may be heated, insofar as the ingredient (C') in the composition is not activated. From this viewpoint, the coated film is preferably left standing at a temperature from 0°C to 60°C, and more preferably from 15°C to 40°C. The stationary time is preferably one min or longer, and more preferably three min or longer from the viewpoint of shape stability allowing retention of the shape of an adhesive composition film.

### (Exterior Component Mounting Step)

Next, a rubber component for a tread (not illustrated) is mounted on the tire case 17, on which a composition layer is formed. The rubber component for a tread is an unvulcanized exterior component, which contains at least an unvulcanized rubber, and by heating the same for vulcanizing the unvulcanized rubber a tread 30 containing a vulcanized rubber is obtained. There is no particular restriction on the formation method and mounting method of a rubber component for a tread. For example, a belt-shaped rubber component for a tread having a tread pattern configured with a plurality of grooves in a contact area with road surface is formed in advance by injection molding. Then, the rubber component for a tread is wound around the tire case 17, such that a rubber in the rubber component for a tread touches directly a composition layer formed on the tire case 17.

Thus, a green tire including a tire case 17, a composition layer, and a rubber component for a tread is obtained.

### - Heating Step-

Next, the obtained green tire is heated.

The heating temperature is, for example, preferably from 150°C to 220°C, and further preferably from 160°C to 200°C. The rubber component for a tread is preferably pressurized during vulcanization, and the pressure is especially preferably from 0.1 MPa to 20 MPa. The heating time is preferably from one min to 60 min, and further preferably from 5 min to 30 min.

When the boiling point of a decomposition product of the ingredient (C') contained in the composition is 150°C or higher, the heating temperature for heating a green tire in the heating step is preferably lower than the boiling point of a decomposition product of the ingredient (C') by 10°C or more from the viewpoint of reduction of voids at an interface between an adhesion layer and an exterior component. Namely, if the boiling point of a decomposition product of the ingredient (C') is B (°C), the heating temperature is preferably B-10 (°C) or lower.

When plural kinds of compounds are generated as decomposition products of the ingredient (C'), the boiling point of the decomposition product having the lowest boiling point is used as "B (°C)".

The heating is conducted in a state where at least part of unvulcanized rubber contained in a rubber component for a tread is in direct contact with a composition layer. By the heating, the composition layer is converted to an adhesion layer 19, and an unvulcanized rubber in the rubber component for a tread is vulcanized to form a tread 30.

When a sealing layer 24 composed of a vulcanized rubber is bonded to the bead area 12 of the tire case 17 using an adhesive, *etc.,* the tire 10 is completed.

### (Action)

Since the tread 30 is placed on the tire case 17 through the intermediary of the adhesion layer 19 in the tire 10 of the embodiment, the tread 30 (exterior component) is not apt to detach from the tire case 17. Further, since the adhesion layer 19 in the tire 10 is formed from a composition containing as the ingredient (C') a thermal radical generator that is a peroxide, a decomposition product of which has a boiling point of 150°C or higher, there appears little void in the adhesion layer 19.

Further, since the tire case 17 in the tire 10 is formed from a resin material containing a thermoplastic resin, its structure may be simple and the weight is less than a conventional rubber-made tire. Therefore, the tire 10 of the embodiment has higher resistance to friction and durability. Further, since the tire case 17 and the tread 30 may be produced by injection molding, the productivity can be excellent.

Other actions and possible forms are the same as the first embodiment.

A tire according to the third embodiment includes the following modes of tires.
<B1> A tire including:
   a tire frame, which is toric and is formed from a resin material containing a thermoplastic resin,
   an adhesion layer, which is obtained by heating a composition layer formed from a composition containing a polythiol compound, a compound having a functional group reactive with a thiol group, and a thermal radical generator that is a peroxide, a decomposition product of which has a boiling point of 150°C or higher, and
   an exterior component, which contains a vulcanized rubber obtained by vulcanizing an unvulcanized rubber touching at least partly the composition layer, and which is mounted on the tire frame via the adhesion layer.
<B2> The tire according to <B1>, wherein the compound having a functional group reactive with a thiol group has at least one kind selected out of an isocyanate group, an acryloyl group, a methacryloyl group, an epoxy group, an allyl group, a vinyl group, an allyloxy group, a vinyloxy group, or a group having a norbornene skeleton, as a functional group reactive with the thiol group.
<B3> The tire according to <B1> or <B2>, wherein the compound having a functional group reactive with a thiol group is a polyisocyanate compound, and a ratio (S/N) of a number (S) of sulfur atoms contained in the adhesion layer to a number (N) of nitrogen atoms contained in the adhesion layer is 3 or more.
<B4> The tire according to any one of <B1> to <B3>, wherein the ratio (FG/SH) of the total mole number (FG) of functional groups reactive with the thiol group contained in the compound having a functional group reactive with a thiol group to the total mole number (SH) of thiol groups contained in the polythiol compound is 0.22 or less.
<B5> The tire according to any one of <B1> to <B4>, wherein the ratio (FG/SH) of the total mole number (FG) of functional groups reactive with the thiol group contained in the compound having a functional group reactive with a thiol group to the total mole number (SH) of thiol groups contained in the polythiol compound is 0.075 or more.
<B6> The tire according to according to any one of <B1> to <B5>, wherein the compound having a functional group reactive with a thiol group includes at least one of an aromatic ring, an aliphatic ring, or a heterocyclic ring.
<B7> The tire according to according to any one of <B1> to <B6>, wherein a thickness of the adhesion layer is from 10 µm to 1000 µm.
<B8> The tire according to according to any one of <B1> to <B7>, wherein the composition includes further a catalyst for promoting a reaction between the polythiol compound and the compound having a functional group reactive with a thiol group.
<B9> A method of producing the tire according to any one of <B1> to <B8>, the method comprising:
   a green tire forming step of forming a green tire comprising a tire frame, which is toric and is formed from a resin material containing a thermoplastic resin; a composition layer, which is formed from a composition including a polythiol compound, a compound having a functional group reactive with a thiol group, and a thermal radical generator including a peroxide, a decomposition product of which has a boiling point of 150°C or higher; and an unvulcanized exterior component, which contains an unvulcanized rubber and which is mounted on the tire frame via the composition layer such that at least part of the unvulcanized rubber touches the composition layer; and
   a heating step of vulcanizing the unvulcanized rubber contained in the exterior component, and activating the thermal radical activator contained in the composition layer, by heating the green tire.
<B10> The method of producing the tire according to <B9>, wherein a temperature for heating the green tire in the heating step is B-10 (°C) or lower, wherein B (°C) represents the boiling point of the decomposition product of the thermal radical generator (C).

### Examples

The invention will be described more specifically below by way of Examples, which however does not restrict any way the invention.

### <<Example A>>

### [Resin Material]

For a resin material forming a tire frame, a thermoplastic elastomer produced as below was used. In a 2 L volume reactor provided with a stirrer, a nitrogen gas feed port, and a condensed water discharge port, 43.7 g of 1,2-aminododecanoic acid (produced by Sigma-Aldrich Co., LLC.), 601 g of aminododecanolactam (produced by Sigma-Aldrich Co., LLC.), and 15.5 g of adipic acid (produced by Sigma-Aldrich Co., LLC.) were charged, the inside of the reactor was purged thoroughly with nitrogen. The temperature was elevated to 280°C, and a reaction was carried out at a pressure of 0.6 MPa for four hours. After releasing the pressure the reaction was continued for another one hour in a nitrogen flow to obtain a white solid of nylon 12 polymer (a hard segment with chain extenders bonded at both the ends "PA12") having a weight-average molecular weight of 6000.

To 250 g of the obtained nylon 12 polymer, 70.9 g of polyoxypropylene/ poly(tetramethylene ether)glycol/polyoxypropylene (PPG-PTMG-PPG) diamine (Product name: JEFFAMINE, grade number: XTJ-548, weight-average molecular weight 1700, produced by Huntsman Corporation) as a soft segment, and 71 mg of tetra-*tert*-butoxy zirconium were added, and the mixture was stirred at 230°C for six hours (polymerization reaction B). After adding 1 g of IRGANOX 1010, a white polyamide thermoplastic elastomer (weight-average molecular weight: 75,000) was obtained. The obtained polyamide thermoplastic elastomer was pelletized and then molded at 220°C to obtain a sample piece (150 mm long × 270 mm wide × 2.5 mm thick).

### [Unvulcanized Rubber]

An unvulcanized rubber for forming an exterior component was blended according to the formulation of the following Table 1 to obtain a sample piece of unvulcanized rubber (150 mm long × 270 mm wide × 2.5 mm thick).

**Table 1**

| | | |
|---|---|---|
| Formulation | NR | 20 |
| | SBR | 80 |
| | Carbon black | 50 |
| | Stearic acid | 2 |
| | Anti-aging agent | 1 |
| | Zinc white | 3 |
| | Vulcanization accelerator 1 | 0.4 |
| | Vulcanization accelerator 2 | 0.2 |
| | Sulfur | 1.4 |

| | | |
|---|---|---|
| *Values in the table are in part by mass. | | |

The details of each ingredient in Table 1 are as follows.
Natural rubber (NR): RSS#3
Styrene/butadiene copolymer rubber (SBR): Trade name "JSR 1500" produced by JSR Corporation
Anti-aging agent: *N*-phenyl-*N*'-(1,3-dimethylbutyl)-*p*-phenylenediamine, Trade name "NOCRAC 6C", produced by Ouchi Shinko Chemical Industrial Co., Ltd.,
Vulcanization accelerator 1: 1,3-diphenylguanidine, Trade name "NOCCELER D (D-P)", produced by Ouchi Shinko Chemical Industrial Co., Ltd.,
Vulcanization accelerator 2: di-2-benzothiazolyl disulfide, Trade name "NOCCELER DM-P (DM)", produced by Ouchi Shinko Chemical Industrial Co., Ltd.

### [Composition]

A composition for forming an adhesion layer was blended according to the formulation of the following Table 2 to obtain a composition of each formulation. The values of the ratio (Iso/SH) of each formulation example and the ratio (S/N) of each composition are also presented in Table 2.

**Table 2**

| | | Formulation example A1 | Formulation example A2 | Formulation example A3 | Formulation example A4 | Formulation example A5 | Formulation example A6 | Formulation example A7 |
|---|---|---|---|---|---|---|---|---|
| Ingredient (A) | PEMP | 5 | 5 | 5 | 5 | 5 | 5 | 5 |
| | PETG | 5 | 5 | 5 | 5 | 5 | 5 | 5 |
| Ingredient (B) | Z-Iso | 4.51 | 4.51 | 9.02 | 4.51 | 15.05 | 9.02 | 4.51 |
| Ingredient (C) | PERBUTYL O | - | - | - | - | 5.31 | 5.31 | 5.31 |
| | PERCUMYL D | 9.22 | 17.28 | 11.52 | 6.91 | - | - | - |
| Ingredient (D) | TEDA | 2 | 2 | 2 | 2 | 2 | 2 | 2 |
| Solvent | MEK | - | - | 3.84 | 2.30 | - | - | - |
| Ratio (Iso/SH) | | 0.15 | 0.15 | 0.3 | 0.15 | 0.5 | 0.3 | 0.15 |
| Ratio (S/N) | | 4.44 | 4.44 | 2.22 | 4.44 | 1.33 | 2.22 | 4.44 |

| | | | | | | | | |
|---|---|---|---|---|---|---|---|---|
| *Values in the table are in part by mass. "-" in the table means that the relevant ingredient is not contained. | | | | | | | | |

In Table 2 "PEMP" represents pentaerythritol tetrakis(3-mercaptopropionate) (primary thiol, produced by SC Organic Chemical Co., Ltd.), "PETG" represents pentaerythritol tetrakis(thioglycolate) (primary thiol, produced by Yodo Kagaku Co., Ltd.), "Z-Iso" represents the compound expressed by the structural formula (B-1), "PERBUTYL O" represents *t*-butyl peroxy-2-ethyl hexanoate (Trade name: "PERBUTYL O", boiling point of decomposition product: 82°C, one min half-life temperature: 134°C, produced by NOF Corporation), "PERCUMYL D" represents dicumyl peroxide (Trade name "PERCUMYL D", boiling point of decomposition product: 202°C, one min half-life temperature: 175°C, produced by NOF Corporation), "TEDA" represents a 0.1% by mass methyl ethyl ketone solution of a 33% by mass solution of triethylenediamine in dipropylene glycol (Trade name "DABCO 33LY Catalyst", produced by Air Products and Chemicals, Inc.), and "MEK" represents methyl ethyl ketone.

### [Examples A1, A2 and A4, Reference Example A3 and Comparative Examples A1 to A3]

A solvent dilution type halogenated rubber adhesive (Trade name: CHEMLOK 2000, produced by Lord Corporation) was coated on a release sheet to form a coated film, which was then left to stand at 25°C for 60 min to form a prime coat layer with a thickness of 100 µm.

A composition of each formulation example set forth in Table 2 was painted on the prime coat layer to form a coated film, and then left to stand at 25°C for 12 hours to obtain a composition layer as a 200 µm-thick adhesive composition film.

Then, the surface of the composition layer as an adhesive composition film was bonded with the sample piece of unvulcanized rubber keeping direct contact, and thereafter only the release sheet was removed.

Thereafter, the surface of the prime coat agent layer exposed by removal of the release sheet was bound keeping direct contact with the surface of the sample piece of resin material to obtain an unvulcanized layered body (namely, a sample piece of green tire), in which a resin material, a prime coat layer, a composition layer, and an unvulcanized rubber are layered one on another in the mentioned order.

The obtained unvulcanized layered body was kept at a temperature of 150°C under a press pressure of 2 MPa for 30 min. By this operation, the sample piece of unvulcanized rubber is vulcanized, and the composition layer became an adhesion layer, and the prime coat layer became an undercoat layer to obtain a vulcanized layered body (namely, a sample piece of tire), in which a resin material, an undercoat layer, an adhesion layer, and a vulcanized rubber are layered one on another in the mentioned order.

### [Measurement of Ratio (S/N)]

A value of the ratio (S/N) in an adhesion layer with respect to a vulcanized layered body obtained in each Example or Comparative Example was determined by an elementary analysis. The results are resented in Table 3.

### [Evaluation of Peel Strength]

For measuring a peel strength (N/25 mm) a 180° peel test was performed by pulling a sample piece of resin material and a sample piece of vulcanized rubber at the end part of a vulcanize layered body in the 180° direction at a pulling rate of 50 mm/min. The results are resented in Table 3. In a case in which the peel strength of the layered body (namely, a sample piece of tire) exceeds 100 N/25 mm, it may be judged that the adhesive property between a sample piece of resin material and a sample piece of vulcanized rubber is excellent.

The failure mode at a peel strength measurement was also presented in Table 3. "Rubber cohesion failure" in Table 3 means that the bond was not broken at an interface, and a sample piece of rubber was broken, and "rubber/adhesion layer interfacial failure" means that the interface between a sample piece of rubber and an adhesion layer was broken.

**Table 3**

| | Example A1 | Example A2 | Reference Example A3 | Example A4 | Comparative Example A1 | Comparative Example A2 | Comparative Example A3 |
|---|---|---|---|---|---|---|---|
| Formulation example | Formulation example A1 | Formulation example A2 | Formulation example A7 | Formulation example A4 | Formulation example A5 | Formulation example A6 | Formulation example A3 |
| Ratio (S/N) | 4.44 | 4.44 | 4.44 | 4.44 | 1.33 | 2.22 | 2.22 |
| Peel strength (N/25 mm) | 283 | 369 | 204 | 203 | 60 | 100 | 60 |
| Failure mode | Rubber cohesion failure | Rubber cohesion failure | Rubber cohesion failure | Rubber cohesion failure | Rubber/adhesion layer interfacial failure | Rubber/adhesion layer interfacial failure | Rubber/adhesion layer interfacial failure |

### <<Example B>>

### [Resin Material]

For a resin material forming a tire frame, a thermoplastic elastomer produced as below was used. In a 2 L volume reactor provided with a stirrer, a nitrogen gas feed port, and a condensed water discharge port, 43.7 g of 1,2-aminododecanoic acid (produced by Sigma-Aldrich Co., LLC.), 601 g of aminododecanolactam (produced by Sigma-Aldrich Co., LLC.), and 15.5 g of adipic acid (produced by Sigma-Aldrich Co., LLC.) were charged, the inside of the reactor was purged thoroughly with nitrogen. The temperature was elevated to 280°C, and a reaction was carried out at a pressure of 0.6 MPa for 4 hour. After releasing the pressure the reaction was continued for another 1 hour in a nitrogen flow to obtain a white solid of nylon 12 polymer (a hard segment with chain extenders bonded at both the ends "PA12") having a weight-average molecular weight of 6000.

To 250 g of the obtained nylon 12 polymer, 70.9 g of polyoxypropylene/ poly(tetramethylene ether)glycol/polyoxypropylene (PPG-PTMG-PPG) diamine (Product name: JEFFAMINE, grade number: XTJ-548, weight-average molecular weight 1700, produced by Huntsman Corporation) as a soft segment, and 71 mg of tetra-*tert*-butoxy zirconium were added, and the mixture was stirred at 230°C for 6 hours (polymerization reaction B). After adding 1 g of IRGANOX 1010, a white polyamide thermoplastic elastomer (weight-average molecular weight: 75,000) was obtained. The obtained polyamide thermoplastic elastomer was pelletized and then molded at 220°C to obtain a sample piece (150 mm long × 270 mm wide × 2.5 mm thick).

### [Unvulcanized Rubber]

An unvulcanized rubber for forming an exterior component was blended according to the formulation of the following Table 4 to obtain a sample piece of unvulcanized rubber (150 mm long ×270 mm wide ×2.5 mm thick).

**Table 4**

| | | |
|---|---|---|
| Formulation | NR | 20 |
| | SBR | 80 |
| | Carbon black | 50 |
| | Stearic acid | 2 |
| | Anti-aging agent | 1 |
| | Zinc white | 3 |
| | Vulcanization accelerator 1 | 0.4 |
| | Vulcanization accelerator 2 | 0.2 |
| | Sulfur | 1.4 |

| | | |
|---|---|---|
| Values in the table are in part by mass. | | |

The details of each ingredient in Table 4 are as follows.
Natural rubber (NR): RSS#3
Styrene/butadiene copolymer rubber (SBR): Trade name "JSR 1500" produced by JSR Corporation
Anti-aging agent: *N*-phenyl-*N'*-(1,3-dimethylbutyl)-*p*-phenylenediamine, Trade name "NOCRAC 6C", produced by Ouchi Shinko Chemical Industrial Co., Ltd.,
Vulcanization accelerator 1: 1,3-diphenylguanidine, Trade name "NOCCELER D (D-P)", produced by Ouchi Shinko Chemical Industrial Co., Ltd.,
Vulcanization accelerator 2: di-2-benzothiazolyl disulfide, Trade name "NOCCELER DM-P (DM)", produced by Ouchi Shinko Chemical Industrial Co., Ltd.

### [Composition]

A composition for forming an adhesion layer was blended according to the formulation of the following Table 5 to obtain a composition of each formulation. The values of the ratio (FG/SH) of each formulation example, as well as the ratio (S/N), and the thermal radical generator (C')/thiol group of each composition are also presented in Table 5.

**Table 5**

| | | Formulation example B1 | Formulation example B2 | Formulation example B3 | Formulation example B4 | Formulation example B5 | Formulation example B6 | Formulation example B7 |
|---|---|---|---|---|---|---|---|---|
| Ingredient (A) | PEMP | 5 | 5 | 5 | 5 | 7.5 | 5 | 5 |
| | PETG | 5 | 5 | 5 | 5 | 2.5 | 5 | 5 |
| Ingredient (B') | Z-Iso | 4.51 | 4.51 | 4.51 | 4.51 | 4.42 | 4.51 | 4.51 |
| Ingredient (C') | PERBUTYL O | - | - | - | - | - | 5.31 | - |
| | PEROCTA O | - | - | - | - | - | - | 7.03 |
| | PERCUMYL D | 11.52 | 9.22 | 6.91 | 17.28 | 11.29 | - | - |
| Ingredient (D') | TEDA | 2 | 2 | 2 | 2 | 2 | 2 | 2 |
| Solvent | MEK | 3.84 | 3.07 | 2.30 | 5.76 | - | - | - |
| Ratio (FG/SH) | | 0.15 | 0.15 | 0.15 | 0.15 | 0.15 | 0.15 | 0.15 |
| Ratio (S/N) | | 4.44 | 4.44 | 4.44 | 4.44 | 4.44 | 4.44 | 4.44 |
| Thermal radical generator (C') /thiol group | | 0.50 | 0.40 | 0.30 | 0.75 | 0.50 | 0.30 | 0.30 |

| | | | | | | | | |
|---|---|---|---|---|---|---|---|---|
| *Values in the table are in part by mass. "-" in the table means that the relevant ingredient is not contained. | | | | | | | | |

In Table 5 "PEMP" represents pentaerythritol tetrakis(3-mercaptopropionate) (primary thiol, produced by SC Organic Chemical Co., Ltd.), "PETG" represents pentaerythritol tetrakis(thioglycolate) (primary thiol, produced by Yodo Kagaku Co., Ltd.), "Z-Iso" represents the compound expressed by the structural Formula (B-1), "PERBUTYL O" represents *t*-butyl peroxy-2-ethyl hexanoate (Trade name: "PERBUTYL O", boiling point of decomposition product: 82°C, 1 min half-life temperature: 134°C, produced by NOF Corporation), PEROCTA O" represents 1,1,3,3-tetramethylbutyl peroxy-2-ethyl hexanoate (Trade name: "PEROCTA O", decomposition product: plural kinds are generated including a compound with a boiling point below 150°C, 1 min half-life temperature: 124°C, produced by NOF Corporation), "PERCUMYL D" represents dicumyl peroxide (Trade name "PERCUMYL D", boiling point of decomposition product: 202°C, 1 min half-life temperature: 175°C, produced by NOF Corporation), "TEDA" represents a 0.1% by mass methyl ethyl ketone solution of a 33% by mass solution of triethylenediamine in dipropylene glycol (Trade name "DABCO 33LY Catalyst", produced by Air Products and Chemicals, Inc.), and "MEK" represents methyl ethyl ketone.

### [Examples B1 to B5 and Reference Examples B6 and B7]

A solvent dilution type halogenated rubber adhesive (Trade name: CHEMLOK 2000, produced by Lord Corporation) was coated on a release sheet to form a coated film, which was then left to stand at 25°C for 180 min to form a prime coat layer with a thickness of 100 µm. Then, a composition of each formulation example set forth in Table 5 was painted on the prime coat layer to form a coated film, and then left to stand at 25°C for 12 hours to obtain a composition layer as a 200 µm-thick adhesive composition film.

Then, the surface of the composition layer as an adhesive composition film was bonded with the sample piece of unvulcanized rubber keeping direct contact, and thereafter only the release sheet was removed.

Thereafter, the surface of the prime coat agent layer exposed by removal of the release sheet was bound keeping direct contact with the surface of the sample piece of resin material to obtain an unvulcanized layered body (namely, a sample piece of green tire), in which a resin material, a prime coat layer, a composition layer, and an unvulcanized rubber are layered one on another in the mentioned order.

The obtained unvulcanized layered body was kept at a temperature of 150°C under a press pressure of 2 MPa for 30 min. By this operation, the sample piece of unvulcanized rubber is vulcanized, and the composition layer became an adhesion layer, and the prime coat layer became an undercoat layer to obtain a vulcanized layered body (namely, a sample piece of tire), in which a resin material, an undercoat layer, an adhesion layer, and a vulcanized rubber are layered one on another in the mentioned order.

### [Evaluation of Peel Strength]

For measuring a peel strength (N/25 mm) a 180° peel test was performed by pulling a sample piece of resin material and a sample piece of vulcanized rubber at the end part of a vulcanize layered body in the 180° direction at a pulling rate of 50 mm/min. The results are resented in Table 6. In a case in which the peel strength of the layered body (namely, a sample piece of tire) exceeds 100 N/25 mm, it may be judged that the adhesive property between a sample piece of resin material and a sample piece of vulcanized rubber is excellent.

The failure mode at a peel strength measurement was also presented in Table 6. "Rubber cohesion failure" in Table 6 means that the bond was not broken at an interface, and a sample piece of rubber was broken, and "rubber/adhesion layer interfacial failure" means that the interface between a sample piece of rubber and an adhesion layer was broken.

### [Evaluation of Existence of Void]

Each sample piece of vulcanized layered body was cut vertically, and the cross-section was observed visually to examine existence of a void in an adhesion layer. The results are presented in Table 6.

**Table 6**

| | Example B1 | Example B2 | Example B3 | Example B4 | Example B5 | Reference Example B6 | Reference Example B7 |
|---|---|---|---|---|---|---|---|
| Formulation example | Formulation example B1 | Formulation example B2 | Formulation example B3 | Formulation example B4 | Formulation example B5 | Formulation example B6 | Formulation example B7 |
| Peel strength (N/25mrn) | 278 | 283 | 199 | 369 | 261 | 204 | 104 |
| Failure mode | Rubber cohesion failure | Rubber cohesion failure | Rubber cohesion failure | Rubber cohesion failure | Rubber cohesion failure | Rubber cohesion failure | Rubber/adhesion layer interfacial failure |
| Void existence | Absent | Absent | Absent | Absent | Absent | Present | Present |

## Claims

1. A tire comprising:
a tire frame, which is toric and is formed from a resin material containing a thermoplastic resin,
an adhesion layer, which is formed from a composition comprising a polythiol compound, a polyisocyanate compound, and a radical generator, and in which a ratio (S/N) of a number (S) of sulfur atoms contained in the adhesion layer to a number (N) of nitrogen atoms contained in the adhesion layer is three or more, and
an exterior component, which contains a rubber, and which is mounted on the tire frame via the adhesion layer such that at least part of the rubber touches the adhesion layer,
wherein the radical generator is a thermal radical generator that is a peroxide, and
a boiling point of a decomposition product of the thermal radical generator that is the peroxide is 150°C or higher.

2. The tire according to claim 1, wherein a ratio (Iso/SH) of a total mole number (Iso) of isocyanate groups contained in the polyisocyanate compound to a total mole number (SH) of thiol groups contained in the polythiol compound is 0.22 or less.

3. The tire according to claim 1 or 2, wherein a ratio (Iso/SH) of a total mole number (Iso) of isocyanate groups contained in the polyisocyanate compound to a total mole number (SH) of thiol groups contained in the polythiol compound is 0.075 or more.

4. The tire according to any one of claims 1 to 3, wherein the polyisocyanate compound comprises at least one of an aromatic ring, an aliphatic ring, or a heterocyclic ring.

5. The tire according to any one of claims 1 to 4, wherein a thickness of the adhesion layer is from 10 µm to 1000 µm.

6. The tire according to any one of claims 1 to 5, wherein the composition further comprises a thiourethanization catalyst.

7. A method of producing the tire according to any one of claims 1 to 6, the method comprising:
a green tire forming step of forming a green tire comprising a tire frame, which is toric and is formed from a resin material containing a thermoplastic resin; a composition layer, which is formed from a composition comprising a polythiol compound, a polyisocyanate compound, and a thermal radical generator that is a peroxide, a decomposition product of which has a boiling point of 150°C or higher; and an unvulcanized exterior component, which contains an unvulcanized rubber and which is mounted on the tire frame via the composition layer such that at least part of the unvulcanized rubber touches the composition layer; and
a heating step of vulcanizing the unvulcanized rubber
contained in the exterior component, and activating the thermal radical generator contained in the composition layer, by heating the green tire.

8. The method of producing the tire according to claim 7, wherein a temperature for heating the green tire in the heating step is B-10 (°C) or lower, wherein B (°C) represents the boiling point of the decomposition product of the thermal radical generator.

## Patentansprüche

1. Reifen umfassend:
einen Reifenrahmen, der torisch und aus einem Harzmaterial gebildet ist, das ein thermoplastisches Harz enthält,
eine Haftschicht, die aus einer Zusammensetzung gebildet ist, die eine Polythiolverbindung, eine Polyisocyanatverbindung und einen Radikalerzeuger umfasst und wobei ein Verhältnis (S/N) einer Anzahl (S) von Schwefelatomen, die in der Haftschicht enthalten sind, zu einer Anzahl (N) von Stickstoffatomen, die in der Haftschicht enthalten sind, drei oder mehr beträgt, und
eine äußere Komponente, die einen Kautschuk enthält und die auf dem Reifenrahmen durch die Haftschicht montiert ist, derart, dass mindestens ein Teil des Kautschuks die Haftschicht berührt,
wobei der Radikalerzeuger ein thermischer Radikalerzeuger ist, der ein Peroxid ist, und
ein Siedepunkt eines Zersetzungsprodukts des thermischen Radikalerzeugers, der das Peroxid ist, 150 °C oder höher ist.

2. Reifen nach Anspruch 1, wobei ein Verhältnis (Iso/SH) einer gesamten Molzahl (Iso) von Isocyanatgruppen, die in der Polyisocyanatverbindung enthalten sind, zu einer gesamten Molzahl (SH) von Thiolgruppen, die in der Polythiolverbindung enthalten sind, 0,22 oder weniger beträgt.

3. Reifen nach Anspruch 1 oder 2, wobei ein Verhältnis (Iso/SH) einer gesamten Molzahl (Iso) von Isocyanatgruppen, die in der Polyisocyanatverbindung enthalten sind, zu einer gesamten Molzahl (SH) von Thiolgruppen, die in der Polythiolverbindung enthalten sind, 0,075 oder mehr beträgt.

4. Reifen nach einem der Ansprüche 1 bis 3, wobei die Polyisocyanatverbindung mindestens einen von einem aromatischen Ring, einem aliphatischen Ring oder einem heterocyclischen Ring umfasst.

5. Reifen nach einem der Ansprüche 1 bis 4, wobei eine Dicke der Haftschicht 10 µm bis 1000 µm beträgt.

6. Reifen nach einem der Ansprüche 1 bis 5, wobei die Zusammensetzung ferner einen Thiourethanisierungskatalysator umfasst.

7. Verfahren für die Herstellung eines Reifens nach einem der Ansprüche 1 bis 6, wobei das Verfahren Folgendes umfasst:
einen grünen Reifen bildenden Schritt des Bildens eines grünen Reifens umfassend einen Reifenrahmen, der torisch und aus einem Harzmaterial gebildet ist, das ein thermoplastisches Harz enthält; eine Zusammensetzungsschicht, die aus einer Zusammensetzung gebildet ist, die eine Polythiolverbindung, eine Polyisocyanatverbindung und einen thermischen Radikalerzeuger umfasst, der in Peroxid ist, ein Zersetzungsprodukt dessen einen Siedepunkt von 150 °C oder höher aufweist; und eine unvulkanisierte äußere Komponente, die einen unvulkanisierten Kautschuk enthält und die auf dem Reifenrahmen durch die Zusammensetzungsschicht montiert ist, derart, dass mindestens ein Teil des unvulkanisierten Kautschuks die Zusammensetzungsschicht berührt; und
einen Erhitzungsschritt des Vulkanisierens des unvulkanisierten Kautschuks, der in der äußeren Komponente enthalten ist, und Aktivieren des thermischen Radikalerzeugers, der in der Zusammensetzungsschicht enthalten ist, durch Erhitzen des grünen Reifens.

8. Verfahren zum Herstellen des Reifens nach Anspruch 7, wobei eine Temperatur zum Erhitzen des grünen Reifens im Erhitzungsschritt B-10 (°C) oder niedriger ist, wobei B (°C) den Siedepunkt des Zersetzungsprodukts des thermischen Radikalerzeugers darstellt.

## Revendications

1. Pneumatique comprenant:
une structure de pneumatique, qui est torique et qui est formée d'un matériau de résine contenant une résine thermoplastique,
une couche d'adhésion, qui est formée à partir d'une composition comprenant un composé polythiol, un composé polyisocyanate, et un générateur de radicaux, et dans laquelle un rapport (S/N) d'un nombre (S) des atomes de soufre contenus dans la couche d'adhésion à un nombre (N) des atomes d'azote contenus dans la couche d'adhésion est de trois ou plus, et
un composant extérieur, qui contient un caoutchouc, et qui est monté sur la structure de pneumatique par l'intermédiaire de la couche d'adhésion de sorte qu'au moins une partie du caoutchouc touche la couche d'adhésion,
le générateur de radicaux étant un générateur de radicaux thermiques qui est un peroxyde, et
un point d'ébullition d'un produit de décomposition du générateur de radicaux thermiques qui est le peroxyde est de 150°C ou plus.

2. Pneumatique selon la revendication 1, un rapport (Iso/SH) d'un nombre total de moles (Iso) des groupes isocyanate contenus dans le composé polyisocyanate à un nombre total de mole (SH) des groupes thiol contenus dans le composé polythiol étant de 0,22 ou moins.

3. Pneumatique selon la revendication 1 ou 2, un rapport (Iso/SH) d'un nombre total de moles (Iso) des groupes isocyanate contenus dans le composé polyisocyanate à un nombre total de mole (SH) des groupes thiol contenus dans le composé polythiol étant de 0,075 ou plus.

4. Pneumatique selon l'une quelconque des revendications 1 à 3, le composé polyisocyanate comprenant au moins l'un d'un cycle aromatique, d'un cycle aliphatique, ou d'un cycle hétérocyclique.

5. Pneumatique selon l'une quelconque des revendications 1 à 4, une épaisseur de la couche d'adhésion étant de 10 µm à 1 000 µm.

6. Pneumatique selon l'une quelconque des revendications 1 à 5, la composition comprenant en outre un catalyseur de thiouréthanisation.

7. Procédé de production du pneumatique selon l'une quelconque des revendications 1 à 6, le procédé comprenant:
une étape de formation d'un pneumatique cru de formation d'un pneumatique cru comprenant une structure de pneumatique, qui est torique et qui est formée d'un matériau de résine contenant une résine thermoplastique; d'une couche de composition, qui est formée à partir d'une composition comprenant un composé polythiol, un composé polyisocyanate, et un générateur de radicaux thermiques qui est un peroxyde, dont un produit de décomposition présente un point d'ébullition de 150°C ou plus; et d'un composant non vulcanisé extérieur, qui contient un caoutchouc non vulcanisé et qui est monté sur la structure de pneumatique par l'intermédiaire de la couche de composition de sorte qu'au moins une partie du caoutchouc non vulcanisé touche la couche de composition; et
une étape de chauffage de vulcanisation du caoutchouc non vulcanisé contenu dans le composant extérieur, et d'activation du générateur de radicaux thermiques contenu dans la couche de composition, en chauffant le pneumatique cru.

8. Procédé de production du pneumatique selon la revendication 7, une température de chauffage du pneumatique cru dans l'étape de chauffage étant B-10 (°C) ou moins, B (°C) représentant le point d'ébullition du produit de décomposition du générateur de radicaux thermiques.
